# EUROPÄISCHE PATENTSCHRIFT

(11) **EP 3 823 868 B1**
(45) Veröffentlichungstag und Bekanntmachung des Hinweises auf die Patenterteilung: **09.08.2023**
(21) Anmeldenummer: 19735274.3
(22) Anmeldetag: 27.06.2019
(51) Int. Cl.: B60T 13/26, B60T 13/68, B60T 17/22

(54) **ELEKTROPNEUMATISCHES FESTSTELLBREMSMODUL MIT DIREKT GESTEUERTEN VENTILEN UND ANTI-COMPOUND-ANSCHLUSS**
ELECTROPNEUMATIC PARKING BRAKE MODULE WITH DIRECTLY CONTROLLED VALVES AND ANTI-COMPOUND CONNECTION
MODULE DE FREIN DE STATIONNEMENT ÉLECTROPNEUMATIQUE POURVU DE SOUPAPES À COMMANDE DIRECTE ET D'UN RACCORD DE NON-ADDITION DES EFFORTS DE FREINAGE

(30) Priorität: 20.07.2018 DE 102018117596
(43) Veröffentlichungstag der Anmeldung: 26.05.2021
(73) Patentinhaber: ZF CV Systems Europe BV, 1170 Brussels (BE)
(72) Erfinder: VAN THIEL, Julian, 30938 Großburgwedel (DE)
(74) Vertreter: Rabe, Dirk-Heinrich
(86) Internationale Anmeldenummer: PCT/EP2019/067193
(87) Internationale Veröffentlichungsnummer: WO 2020/015975

(56) Entgegenhaltungen:
- EP-A1- 1 731 394
- EP-A1- 3 112 231
- WO-A1-2008/061799
- WO-A2-2006/125615
- DE-A1- 10 336 611
- DE-A1-102013 004 506
- JP-A- H11 139 301

## Beschreibung

Die Erfindung betrifft ein elektropneumatisches Feststellbremsmodul. Solche elektropneumatischen Feststellbremsmodule, auch elektropneumatische Handbrems-Module oder Parkbrems-Module genannt, dienen dazu sogenannte Feststellbremsen, in der Regel Federspeicherbremsen eines pneumatischen Bremssystems für ein Nutzfahrzeug zu betätigen.

Federspeicherbremsen können als Feststellbremsen bzw. Parkbremsen verwendet werden und weisen einen fehlerbelasteten Bremsaktuator auf, der drucklos die Bremse zuspannt, sodass beim drucklosen Zustand das Fahrzeug entsprechend gebremst ist. Zum Lösen der Federspeicherbremsen werden diese mit Druckluft beaufschlagt, sodass die Federspeicherbremsen gegen die Kraft der Feder gelöst werden.

In der Regel verfügen solche elektropneumatischen Feststellbremsmodule daher über einen Vorratsanschluss zum Anschließen eines Druckluftvorrats, und wenigstens einen Federspeicheranschluss zum Anschließen wenigstens eines Federspeicherbremszylinders. Hierbei ist es denkbar, dass an einen einzigen Federspeicheranschluss des elektropneumatischen Feststellbremsmoduls sämtliche Fehlerspeicherbremszylinder des Nutzfahrzeugs, insbesondere des Triebwagens einer Triebfahrzeug-Anhänger-Kombination, angeschlossen sind. Es ist auch möglich, dass hierfür separate Anschlüsse vorgesehen sind.

In der Regel nutzen derartige elektropneumatische Feststellbremsmodule ein Relaisventil, um den Federspeicheranschluss und somit die Federspeicherbremszylinder mit einem Volumenstrom zu versorgen.

Ein solches elektropneumatisches Feststellbremsmodul ist beispielsweise in DE 103 36 611 A1 offenbart. Das Relaisventil ist mit einer Vorsteuereinheit gekoppelt, die über ein elektrisch geschaltetes 2/2-Wegeventil und ein bistabiles 3/2-Wegeventil einen Steuereingang des Relaisventils mit dem Vorratsanschluss verbindet. Das elektrisch gesteuerte 2/2-Wegeventil dient zum gepulsten Entlüften des Steuereingangs, um die Federspeicher auch zum Hilfs-bremsen oder zusätzlichem Einbremsen zu verwenden. Das bistabile 3/2-Wegeventil dient dazu einen be- oder entlüfteten Zustand des Steuereingangs des Relaisventils aufrecht zu erhalten, um den Zustand der Federspeicherbremszylinder aufrecht zu erhalten. Im Fahrbetrieb soll permanent ein Druck an dem Federspeicheranschluss ausgesteuert werden, sodass die Federspeicherbremszylinder gelöst sind. Im abgestellten Zustand des Fahrzeugs allerdings, sollen die Federspeicherbremszylinder zugespannt sein, das heißt entlüftet.

### < Austauschseite 2a einfügen>

Ein elektropneumatisches Feststellbremsmodul ohne Relaisventil ist in EP 2 129 562 B1 offenbart. Die dort offenbarte Vorrichtung nutzt einzig ein tristabiles Magnetventil, welches ein direktes Verbinden des Vorratsanschlusses mit dem Anschluss für die Federspeicherbremszylinder erlaubt. Allerdings sind derartige tristabile Magnetventile äußerst komplex und sehr großbauend, sodass auch hier der Bedarf besteht, eine einfachere Lösung bereit zu stellen.

Aus EP 2 939 892 A1 ist ferner ein elektropneumatisches Feststellbremsmodul bekannt, das eine elektrisch ansteuerbare Ventileinrichtung nutzt, die ausgehend von dem Vorratsanschluss eine Verzweigung zwischen einer pneumatischen Leitung für die Feststellbremszylinder, und eine pneumatische Leitung für den Anschluss eines Anhängersteuerventils (TCV) aufweist. An die pneumatische Leitung für die Federspeicherbremszylinder ist ein Steuerventil angeschlossen, welches als 3/2-Wegeventil ausgebildet ist und sowohl einen pneumatischen als auch einen elektrischen Steuereingang aufweist. EP 2 939 892

### Austauschseite 2a (einzufügen auf Seite 2 nach dem zweiten Absatz)

Die WO2008061799A1 offenbart eine Feststellbremsvorrichtung für ein pneumatisches Bremssystem eines Nutzfahrzeugs mit einer Steuereinrichtung, über die eine Feststellbremsbetätigungseinrichtung ansteuerbar ist, um ein Feststellen und Lösen einer Feststellbremse zu bewirken, und mit einer Feststellbremse-Notlöseeinrichtung, die bei Ausfall der Feststellbremsbetätigungseinrichtung zum Lösen der Feststellbremse dient. Hierbei ist vorgesehen, dass die Feststellbremse-Notlöseeinrichtung unabhängig von der Steuereinrichtung ansteuerbar ist. Dabei ist die Druckmittelzuführleitung der Notlöseeinrichtung mit der Druckluftaufbereitungsanlage verbindbar.

A1 verzichtet damit auf eine Vorsteuereinheit. Allerdings sind auch solche doppeltwirkenden Ventile, die sowohl einen pneumatischen als auch einen elektrischen Steuereingang aufweisen ebenfalls aufwendig und eine einfachere Lösung ist weiterhin gewünscht.

Aus dem Bereich der Betriebsbremsen ist die DE 10 2014 006 614 A1 bekannt. Dort ist eine pneumatische Bremseinrichtung für Kraftfahrzeuge offenbart, die einen Bremssignalgeber, einen Vorratsdruckspeicher und eine pneumatisch betätigbare Radbremse pro Rad hat sowie wenigstens eine Achse des Kraftfahrzeugs mit jeweils einem elektrisch ansteuerbaren Radbremsmodul pro Rad zur Einstellung eines Soll-Bremsdrucks der jeweiligen Radbremse. Eine elektronische Steuereinheit ermittelt Vorgabewerte der Soll-Bremsdrücke der Radbremsen unter Berücksichtigung des Bremssignalgebers. Jedes Radbremsmodul umfasst wenigstens ein Belüftungsventil und ein Entlüftungsventil, elektrisch betätigbare Aktivierungsmittel zur Aktivierung des Belüftungsventils und/oder des Entlüftungsventils, sowie eine Steuerlogik mit Mitteln zu Erzeugung eines Stellsignals für das Aktivierungsmittel entsprechend dem Vorgabewert für den Soll-Bremsdruck. Um die Herstellungskosten und die Baugröße der pneumatischen Bremseinrichtung zu verringern schlägt DE 10 2014 006 614 vor, dass das Belüftungsventil und sein Aktivierungsmittel derart ausgebildet sind, dass der pneumatische Druck aus dem Vorratsdruckspeicher im betätigten Zustand des Belüftungsventils direkt an die jeweilige Radbremse durchsteuerbar ist und/oder das Entlüftungsventil den Bremsdruck der Radbremse im betätigten Zustand direkt in die Atmosphäre entlüftet.

Ein weiteres Problem, da bei bekannten Feststellbremsmodulen besteht, ist das Lösen der Federspeicherbremsen in einem Defektfall des Fahrzeugs. Üblicherweise lassen Steuerungen des Fahrzeugs das einmalige Betätigen der Parkbremse zu, wenn das Fahrzeug einen Defekt hat, um es sicher abzustellen. Wenn das Fahrzeug, dann im Anschluss abgeschleppt werden soll, müssen die Federspeicherbremsen wieder gelöst werden. Dies erfolgt meist manuell, durch "Zurückschrauben" der Zylinder. Alternativ ist es bei manchen Systemen auch möglich, gezielt durch einen pneumatischen Druck, beispielsweise der Betriebsbremse, die Federspeicherbremsen zu belüften.

Weiterhin kann es bei entsprechend ausgelegten (Downsizing) Bremsen dazu kommen, dass bei einer Kraftaddition aus Betriebsbremsbetätigung und Feststellbremsbetätigung zu einer nachhaltigen Schädigung der Bremse kommt. Um dies zu verhindern ist es bekannt, eine entsprechende Anti-Compound-Funktion zu realisieren, bei der die Federspeicherbremse gelöst wird, wenn die Betriebsbremse eingelegt wird und/oder umgekehrt. Die Anti-Compound-Funktion kann dabei entweder "rein" pneumatisch oder elektropneumatisch realisiert werden. Nachteil der elektropneumatisch (SW-seitigen) Anti-Compound-Funktion ist die Wake-up time im geparkten Zustand, die möglicherweise bereits zu einer Nennenswerten Kraftaddition und damit Schädigung der Bremse führen kann.

Aufgabe der vorliegenden Erfindung ist es, ein elektropneumatisches Feststellbremsmodul der eingangs genannten Art bereitzustellen, welches wenigstens einen der genannten Nachteile überwinden kann und ein einfaches Lösen der Federspeicherbremsen im abgestellten Zustand erlaubt.

Die Erfindung löst die Aufgabe durch ein elektropneumatisches Feststellbremsmodul mit den Merkmalen des Anspruchs 1. Das elektropneumatische Feststellbremsmodul weist einen Vorratsanschluss zum Anschließen eines Druckluftvorrats, wenigstens einen Federspeicheranschluss zum Anschließen wenigstens eines Federspeicherbremszylinders, eine Einlass-Auslass-Ventileinheit, die wenigstens eine erste Schaltstellung und eine zweite Schaltstellung einnehmen kann, sowie eine elektropneumatische Vorsteuereinheit zum Aussteuern wenigstens eines ersten Steuerdrucks an der Einlass-Auslass-Ventileinheit auf. Dabei ist vorgesehen, dass in der ersten Schaltstellung der Einlass-Auslass-Ventileinheit der Federspeicheranschluss mit dem Vorratsanschluss zum Aussteuern eines Federspeicherbremsdrucks verbunden ist und in der zweiten Schaltstellung der Einlass-Auslass-Ventileinheit der Federspeicheranschluss mit einem Entlüftungsanschluss der Einlass-Auslass-Ventileinheit verbunden ist, und wobei die Einlass-Auslass-Ventileinheit in der zweiten Schaltstellung ist, wenn der erste Steuerdruck unterhalb eines ersten Grenzwerts liegt. Das elektropneumatische Feststellbremsmodul weist einen Lösesteueranschluss auf, an dem von einer externen Einheit ein Lösesteuerdruck aussteuerbar ist, der die Einlass-Auslass-Ventileinheit dazu veranlasst, in die erste Schaltstellung zu schalten.

Als externe Einheit kann insbesondere ein weiteres, vorzugsweise fest verbautes, Modul innerhalb des Fahrzeugs in Frage kommen, oder eine manuelle bzw. semi-automatische Serviceeinheit, die bedarfsweise an den Lösesteueranschluss anschließbar ist. Hierbei kann es vorteilhaft sein, wenn an dem Lösesteueranschluss ein zusätzliches Rückschlagventil vorgesehen ist, um das Entlüften des Lösesteuerdrucks und damit das Schalten der Einlass-Auslass-Ventileinheit in die zweite Schaltstellung zu verhindern, sodass die Federspeicherbremsen gelöst bleiben. Ein solches Rückschlagventil kann vorzugsweise im Bedarfsfall eingeschraubt werden. Als Rückschlagventil kommt insbesondere ein Ventil eines Reifenfüllanschlusses in Frage. Dieses würde in dem Fall der manuellen Belüftung auch eine geeignete Kupplung mit einer Luftquelle, z.B. für Reifendruck, bieten.

Vorzugsweise ist der Lösesteuerdruck wahlweise zur Ausübung einer Anti-Compound-Funktion und/oder Notlösefunktion aussteuerbar. Unter einer Anti-Compound-Funktion wird verstanden, dass das gleichzeitige Zuspannen von Betriebsbremsen und Federspeicherbremsen an derselben Achse verhindert werden soll. Dies lässt sich einerseits durch entsprechende elektrische Signale verhindern. Im Rahmen der vorliegenden Offenbarung wird, dies allerdings pneumatisch umgesetzt. Das heißt, wenn die Federspeicherbremsen zugespannt sind, und dann Betriebsbremsen an derselben Achse aktiviert werden, sollten die Federspeicherbremsen wieder gelöst werden. Um dies zu realisieren, wird vorzugsweise an den Lösesteueranschluss eine Bremsdruckleitung angeschlossen, die den Betriebsbremsdruck der betreffenden Achse, in der Regel wenigstens der Hinterachse, an dem Lösesteueranschluss aussteuert. Daher ist in einer bevorzugten Ausführungsform der Lösesteuerdruck ein Betriebsbremsdruck einer Hinterachse des Fahrzeugs.

Gemäß einer bevorzugten Weiterbildung weist die Vorsteuereinheit einen Entlüftungsanschluss zum Entlüften des ersten Steuerdrucks aufweist, der mit einer Lösesteuerleitung verbunden ist, die zu einem Lösesteueranschluss führt. In diesem Fall fungiert der Lösesteueranschluss auch als Entlüftungsanschluss für die Vorsteuereinheit, oder zumindest den Teil der Vorsteuereinheit, der für die Aussteuerung des ersten Steuerdrucks verantwortlich ist. Der Lösesteueranschluss ist folglich im Normalbetrieb vorzugsweise nicht mit einem Rückschlagventil versehen, um ein ungehindertes Entlüften zu ermöglichen. Er kann aber mit einem Schalldämpfer versehen sein, um im Normalbetrieb den Schall zu dämpfen. Dieser Schalldämpfer ist vorzugsweise abnehmbar gestaltet.

Im Umkehrschluss bedeutet diese Ausgestaltung auch, dass der Lösesteuerdruck über den Entlüftungsanschluss der Vorsteuereinheit aussteuerbar ist, zum Aussteuern des Federspeicherbremsdrucks an dem Federspeicheranschluss. Der Entlüftungspfad der Vorsteuereinheit wird also zum Belüften des Lösesteuerdrucks verwendet. Der Lösesteuerdruck kann in diesem Fall also den ersten Steuerdruck ersetzen und führt ebenso wie dieser zu Aussteuerung des Federspeicherbremsdrucks.

In einer Alternative hierzu weist das elektropneumatische Feststellbremsmodul ein Wechselventil auf, welches zwischen die Vorsteuereinheit und die Einlass-Auslass-Ventileinheit geschaltet ist. Das Wechselventil empfängt vorzugsweise den ersten Steuerdruck von der Vorsteuereinheit an einem ersten Wechselventilanschluss. Ein zweiter Wechselventilanschluss ist mit dem Lösesteueranschluss verbunden. Ferner ist ein dritter Wechselventilanschluss mit der Einlass-Auslass-Ventileinheit verbunden und gibt an diese wahlweise den ersten Steuerdruck oder den Lösesteuerdruck weiter. Auf diese Weise muss nicht der Entlüftungsanschluss der Vorsteuereinheit als Lösesteueranschluss verwendet werden, sondern das Wechselventil kann zwischen den beiden Eingängen, dem ersten Steuerdruck von der Vorsteuereinheit und dem Lösesteuerdruck von dem Lösesteueranschluss, hin und her schalten. Vorzugsweise wird jeweils der höhere von beiden Drücken an dem dritten Wechselventilanschluss bereitgestellt. Das Wechselventil kann zu diesem Zweck als Select-High-Ventil ausgebildet sein, das jeweils den höheren an einem der ersten und zweiten Wechselventilanschlüsse anliegenden Druck an den dritten Wechselventilanschluss weiterleitet. Es kann aber auch einfach einen Rückschlagventilanschluss an dem zweiten Wechselventilanschluss aufweisen, der den Lösesteueranschluss abschließt und ein Entlüften des ersten Steuereingangs über den Lösesteueranschluss vermeidet.

Vorzugsweise umfasst die Einlass-Auslass-Ventileinheit (Hauptventileinheit) wenigstens ein erstes pneumatisch gesteuertes 3/2-Wegeventil mit genau zwei Schaltstellungen. An diesem ersten pneumatisch gesteuerten 3/2-Wegeventil wird vorzugsweise durch die Vorsteuereinheit der erste Steuerdruck ausgesteuert. Ferner wird an diesem ersten pneumatisch gesteuerten 3/2-Wegeventil vorzugsweise der Lösesteuerdruck ausgesteuert.

Auf diese Weise ist ein elektropneumatisches Feststellbremsmodul erreicht, welches kein Relaisventil benötigt und mit üblichen einfachen Ventilen auskommt. Das 3/2-Wegeventil kann ein herkömmliches Relaisventil ersetzen. Vorzugsweise ist die Einlass-Auslass-Ventileinheit rein pneumatisch gesteuert, währen die Vorsteuereinheit elektromagnetisch gesteuert ist. Die Vorsteuereinheit als solche kann insgesamt wie in DE 10 2014 006 614 A1 beschrieben ausgebildet sein. Die Vorsteuereinheit dient also dazu den ersten Steuerdruck auszusteuern, wobei die Einlass-Auslass-Ventileinheit in Abhängigkeit des ersten Steuerdrucks den Federspeicheranschluss mit einem Volumen versorgt, oder entlüftet. Dabei werden die zwei definierten Schaltstellungen des 3/2-Wege-Ventils genutzt. Das 3/2-Wegeventil dient vorzugsweise sowohl zur Beals auch zur Entlüftung des Federspeicheranschlusses.

Erfindungsgemäß ist dabei ferner vorgesehen, dass die Einlass-Auslass-Ventileinheit in der zweiten Schaltstellung ist, wenn der erste Steuerdruck unterhalb eines ersten Grenzwerts liegt. Das Gleiche gilt vorzugsweise auch für den Lösesteuerdruck. Der Grenzwert ist vorbestimmt und baulich durch die Einlass-Auslass-Ventileinheit vorgegeben. Ein typischer Grenzwert liegt im Bereich von 0,25 MPa, ist allerdings frei vorgebbar und nach den jeweiligen Bedürfnissen des Bremssystems, in welchem das elektropneumatische Feststellbremsmodul eingesetzt werden soll, wählbar. Auf diese Weise ist sichergestellt, dass wenn kein erster Steuerdruck ausgesteuert werden kann, dieser also unterhalb des ersten Grenzwerts liegt, der Federspeicheranschluss entlüftet ist und die Federspeicherbremszylinder somit zugespannt werden. Dies ist insbesondere dann vorteilhaft, wenn die Vorsteuereinheit so ausgebildet ist, dass sie stromlos keinen ersten Steuerdruck aussteuert.

Vorzugsweise ist in der ersten Schaltstellung der Einlass-Auslass-Ventileinheit der Federspeicherbremsdruck direkt von dem Vorratsanschluss an den Federspeicheranschluss durchsteuerbar. Unter einem direkten Durchsteuern wird vorliegend das Herstellen einer Volumenverbindung zwischen dem Vorratsanschluss und dem Federspeicheranschluss verstanden, ohne Zwischenschaltung eines Relaisventils. Es wird also von der Einlass-Auslass-Ventileinheit nicht nur ein Steuerdruck ausgesteuert, sondern direkt ein Volumenstrom zum Belüften des Federspeicheranschlusses bereitgestellt.

In einer bevorzugten Ausführungsform ist vorgesehen, dass die Einlass-Auslass-Ventileinheit wenigstens ein 2/2-Wege-Sperrventil aufweist. Das 2/2-Wege-Sperrventil dient vorzugsweise zur gestuften Be- oder Entlüftung des Federspeicheranschlusses. Durch ein gestuftes Entlüften des Federspeicheranschlusses lassen sich die Federspeicherbremszylinder gestuft einbremsen und so zum zusätzlichen Abbremsen, oder Hilfsbremsen des Fahrzeugs verwenden. Aus diesem Grund ist das 2/2-Wege-Sperrventil nur optional.

Das erste 3/2-Wegeventil ist vorzugsweise pneumatisch gesteuert. Die Vorsteuereinheit ist vorzugsweise dazu ausgebildet den ersten Steuerdruck an dem ersten 3/2-Wegeventil bereitzustellen. Vorzugsweise ist auch das 2/2-Wege-Sperrventil pneumatisch gesteuert. In einer Alternative ist das 2/2-Wege-Sperrventil elektromagnetisch ausgebildet. Für den Fall, dass das 2/2-Wege-Sperrventil pneumatisch gesteuert ausgebildet ist, ist vorzugsweise vorgesehen, dass die Vorsteuereinheit einen zweiten Steuerdruck an dem 2/2-Wege-Sperrventil bereitstellt.

In einer bevorzugten Weiterbildung weist das erste 3/2-Wegeventil einen Einlassanschluss, einen Arbeitsanschluss und einen Entlüftungsanschluss auf und das erste 3/2-Wegeventil ist dazu ausgebildet, wechselseitig den Arbeitsanschluss mit dem Einlassanschluss und dem Entlüftungsanschluss zu Verbinden. An dem Eingangsanschluss ist vorzugsweise ein Vorratsdruck aussteuerbar. Vorzugsweise ist der Eingangsanschluss mit dem Vorratsanschluss verbunden.

In einer bevorzugten Weiterbildung ist zwischen dem Vorratsanschluss und dem Eingangsanschluss ein Rückschlagventil, zum Verhindern eines Rückströmens von dem Federspeicheranschluss zum Vorratsanschluss angeordnet. Hierdurch ist es möglich, einen Steuerdruck, insbesondere den ersten Steuerdruck, aufrecht zu erhalten auch dann wenn der Druck am Vorratsanschluss abnimmt, beispielsweise aufgrund eines Fehlers in der Druckluftversorgung, die zu einem abfallen des Drucks im Druckluftvorrat führt.

Wird allerdings kein Rückschlagventil verwendet, ist es möglich trotz Anliegen des ersten Steuerdrucks ein Zuspannen der Federspeicherbremszylinder zu erreichen, indem der entsprechende Bremskreis heruntergepumpt wird, das heißt der Druck im Druckluftvorrat verringert wird und somit der anliegende Vorratsdruck verringert wird. In diesem Fall wird auch dann, wenn der Federspeicheranschluss direkt mit dem Vorratsanschluss verbunden ist, durch geöffnete Ventile der Federspeicheranschluss über ein Herunterpumpen des Vorratsanschlusses entlüftet und somit die Federspeicherbremszylinder zugespannt.

Weiterhin ist bevorzugt, dass das 2/2-Wege-Sperrventil einen ersten Sperrventilanschluss und einen zweiten Sperrventilanschluss aufweist, wobei der erste Sperrventilanschluss mit dem Arbeitsanschluss des ersten 3/2-Wegeventils, und der zweite Sperrventilanschluss mit dem Federspeicheranschluss verbunden ist. Das 2/2-Wege-Sperrventil ist also zwischen das erste 3/2-Wegeventil und den Federspeicheranschluss geschaltet. Zum gestuften Be- und Entlüften kann dann das erste 3/2-Wegeventil in eine Stellung gebracht werden, die den Federspeicheranschluss mit einer Be- oder Entlüftung verbindet und durch gepulstes Betätigen des 2/2-Wege-Sperrventils diese Verbindung hergestellt wird. Das 2/2-Wege-Sperrventil ist vorzugsweise als pneumatisch gesteuertes 2/2-Wege-Sperrventil ausgebildet, wobei es in der offenen Schaltstellung ist, wenn der zweite Steuerdruck einen zweiten Grenzwert unterschreitet.

In einer bevorzugten Weiterbildung weist die elektropneumatische Vorsteuereinheit wenigstens ein zweites 3/2-Wegeventil auf, wobei das zweite 3/2-Wegeventil zum Aussteuern des ersten Steuerdrucks vorgesehen ist. Das zweite 3/2-Wegeventil ist dazu vorzugsweise zwischen einer ersten und einer zweiten Schaltstellung schaltbar, wobei in der ersten Schaltstellung kein Steuerdruck ausgesteuert wird, das heißt der entsprechende Eingang der Einlass-Auslass-Ventileinheit für den ersten Steuerdruck mit einer Entlüftung verbunden ist, und in einer zweiten Schaltstellung der erste Steuerdruck ausgesteuert wird, das heißt der entsprechenden Eingang der Einlass-Auslass-Ventileinheit mit dem Vorratsanschluss verbunden wird.

In einer bevorzugten Ausführungsform ist das zweite 3/2-Wegeventil als Bistabilventil ausgebildet. Beim Bistabilventil sind sowohl die erste, als auch die zweite Schaltstellung jeweils stromlos stabil und werden vorzugsweise durch einen Permanentmagneten gehalten. Ein solches Bistabilventil fällt bei Wegfall einer Spannung bzw. Stroms nicht federbelastet in eine Schaltstellung zurück, sondern verharrt in der zuletzt eingenommenen Schaltstellung aufgrund der Permanentmagnete. Durch ein solches Bistabilventil lässt sich also eine eingenommene Schaltstellung aufrechterhalten, auch stromlos, und somit lässt sich der ausgesteuerte erste Steuerdruck stromlos aufrechterhalten.

Vorzugsweise weist das Bistabilventil einen ersten Bistabilventilanschluss, einen zweiten Bistabilventilanschluss und einen dritten Bistabilventilanschluss auf, wobei der erste Bistabilventilanschluss mit dem Vorratsanschluss verbunden ist, der zweite Bistabilventilanschluss den ersten Steuerdruck aussteuert und über den dritten Bistabilventilanschluss der erste Steuerdruck entlüftbar ist. Vorzugsweise ist dazu der dritte Bistabilventilanschluss mit einer Entlüftung bzw. dem Lösedruckanschluss verbunden oder verbindbar. Vorzugsweise ist der zweite Bistabilventilanschluss mit einem ersten Steuereingang des ersten 3/2-Wegeventils mittels einer ersten pneumatischen Steuerleitung verbunden oder verbindbar.

In einer weiteren Ausführungsform ist der Lösesteuerdruck direkt in die erste pneumatische Steuerleitung aussteuerbar. Der Lösesteuerdruck wird in dieser Ausführungsform nicht über das Bistabilventil an der Einlass-Auslass-Ventileinheit bereitgestellt, sondern in die erste pneumatische Steuerleitung, also zwischen dem Bistabilventil und dem ersten 3/2-Wegeventil, eingebracht. Dies kann insbesondere über eine Abzweigleitung, ein T-Stück oder ein Ventil erfolgen, das in die erste pneumatische Leitung eingesetzt ist.

Vorzugsweise ist in dieser Variante, bei der die Vorsteuereinheit ein Bistabilventil aufweist, das Wechselventil zwischen das Bistabilventil und das erste 3/2-Wege-Ventil geschaltet. Hierbei ist vorzugsweise vorgesehen, dass der erste Wechselventilanschluss mit dem zweiten Bistabilventilanschluss und der dritte Wechselventilanschluss mit dem ersten Steuereingang verbunden ist. Auf diese Weise ist eine besonders einfache Einsteuerung des Lösesteuerdrucks über das Wechselventil in die erste pneumatische Steuerleitung möglich.

In weiteren Ausführungsformen der Erfindung ist es auch möglich, das Bistabilventil durch eine Kombination von monostabilen Schaltventilen sowie eine pneumatischen Selbsthaltung zu kombinieren, um die Aufrechterhaltung des ausgesteuerten ersten Steuerdrucks zu gewährleisten.

Insofern ist in einer weiteren Ausführungsform vorgesehen, dass die elektropneumatische Vorsteuereinheit eine monostabile Einlass-Auslass-Ventilkombination mit einem Einlassventil und einem Auslassventil zum Aussteuern des ersten Steuerdrucks aufweist. Mittels der monostabilen Einlass-Auslass-Ventilkombination ist durch Bereitstellen entsprechender Schaltsignale zunächst der erste Steuerdruck aussteuerbar. Um diesen dann stromlos aufrechtzuerhalten, ist vorzugsweise eine Rückführleitung vorgesehen, die den von dem ersten 3/2-Wegeventil ausgesteuerten Druck als ersten Steuerdruck an der Einlass-Auslass-Ventileinheit bereitstellt. Sobald mittels der monostabilen Einlass-Auslass-Ventilkombination der erste Steuerdruck ausgesteuert wird, schaltet das erste 3/2-Wegeventil bei Überschreiten des entsprechenden Schwellwerts und steuert einen Druck aus. Durch Rückführung des ausgesteuerten Drucks als ersten Steuerdruck kann die so erreichte Schaltstellung des 3/2-Wegeventils aufrechterhalten und eine Selbsthaltung erzielt werden. Ein Bistabilventil ist in dieser Variante nicht mehr notwendig, wodurch die Kosten und auch der Bauraum für das elektropneumatische Feststellbremsmodul reduziert werden können.

Vorzugsweise wird der von dem 3/2-Wegeventil ausgesteuerte Druck als erster Steuerdruck gedrosselt an der Einlass-Auslass-Ventileinheit bereitgestellt. Vorzugsweise weist die Rückführleitung hierzu eine Drossel auf.

In einer ersten Variante weist das Einlassventil hierbei einen mit dem Vorratsanschluss verbundenen ersten Einlassventilanschluss und einen mit der Einlass-Auslass-Ventileinheit verbundenen zweiten Einlassventilanschluss auf, wobei durch Schalten des Einlassventils der erste Steuerdruck an dem zweiten Einlassventilanschluss aussteuerbar ist. Der zweite Einlassventilanschluss ist vorzugsweise über eine erste pneumatische Steuerleitung mit dem ersten 3/2-Wegeventil, genauer gesagt mit dem ersten Steuereingang des ersten 3/2-Wegeventils, verbunden. Das Einlassventil kann hierbei entweder als 2/2-Wegeventil oder als 3/2-Wegeventil ausgebildet sein. Vorzugsweise ist es als 2/2-Wegeventil ausgebildet und stromlos in der ersten, geschlossenen Schaltstellung.

Weiterhin ist bevorzugt, dass das Auslassventil einen mit der Einlass-Auslass-Ventileinheit verbundenen ersten Auslassventilanschluss und einen mit einer Entlüftung verbundenen zweiten Auslassventilanschluss zum Entlüften des ersten Steuerdrucks aufweist. Um das erste 3/2-Wegeventil wieder in die Entlüftungsstellung zu bringen, sodass kein Federspeicherbremsdruck ausgesteuert wird, ist es erforderlich, den ersten Steuereingang des ersten 3/2-Wegeventils zu entlüften. Hierzu dient das Auslassventil, das gemäß dieser Ausführungsform als 2/2-Wegeventil oder als 3/2-Wegeventil ausgebildet sein kann. Das Auslassventil ist vorzugsweise stromlos in einer geschlossenen Schaltstellung, wenn es als 2/2-Wegeventil ausgebildet ist. Der erste Auslassventilanschluss kann mit derselben ersten pneumatischen Steuerleitung verbunden sein wie das Einlassventil. Hierzu kann eine Verzweigung oder Abzweigleitung vorgesehen sein.

In einer bevorzugten Weiterbildung ist die Rückführleitung direkt mit der Einlass-Auslass-Ventileinheit verbunden. Dies ist besonders dann vorteilhaft, wenn sowohl das Einlassventil als auch das Auslassventil als 2/2-Wegeventile ausgebildet sind. Die Rückführleitung zweigt in dieser Variante folglich direkt von der zweiten pneumatischen Leitung, die mit dem Arbeitsanschluss des ersten 3/2-Wegeventils verbunden ist, ab und führt direkt zum ersten Steuereingang des ersten 3/2-Wegeventils. Sie kann hierzu in die erste pneumatische Steuerleitung münden. In dieser Variante wird der von dem ersten 3/2-Wegeventil ausgesteuerte Druck direkt und ohne Zwischenschaltung eines Ventils an dem ersten Steuereingang des ersten 3/2-Wegeventils unabhängig von der Schaltstellung des Einlassventils oder des Auslassventils bereitgestellt. Ein Aussperren des rückgeführten Drucks ist hierbei nicht möglich. Um den rückgeführten Druck aussperren zu können, ist entweder ein weiteres Ventil notwendig, oder das Einlass- oder Auslassventil ist als 3/2-Wegeventil auszubilden.

Demnach ist in einer weiteren Variante vorgesehen, dass das Einlassventil einen mit der Rückführleitung verbundenen dritten Einlassventilanschluss aufweist, wobei in einer ersten Schaltstellung des Einlassventils der zweite Einlassventilanschluss mit dem ersten Einlassventilanschluss verbunden ist, und in einer zweiten Schaltstellung des Einlassventils der zweite Einlassventilanschluss mit dem dritten Einlassventilanschluss verbunden ist. In dieser Ausführungsform ist das Einlassventil als 3/2-Wege-Schaltventil ausgebildet. Vorzugsweise ist das als 3/2-Wegeventil ausgebildete Einlassventil stromlos in der zweiten Schaltstellung, sodass stromlos der rückgeführte Druck als erster Steuerdruck an dem ersten Steuereingang des ersten 3/2-Wegeventils bereitgestellt wird. So wird stromlos eine Selbsthaltung des ersten 3/2-Wegeventils erreicht.

Alternativ hierzu ist es auch möglich, das Auslassventil als 3/2-Wegeventil auszubilden. In dieser Variante weist das Auslassventil einen mit der Rückführleitung verbundenen dritten Auslassventilanschluss auf, wobei in einer ersten Schaltstellung des Auslassventils der erste Auslassventilanschluss mit dem dritten Auslassventilanschluss verbunden ist und in einer zweiten Schaltstellung des Auslassventils der erste Auslassventilanschluss mit dem zweiten Auslassventilanschluss verbunden ist. Vorzugsweise ist das Auslassventil stromlos in der ersten Schaltstellung, sodass stromlos der von dem ersten 3/2-Wegeventil ausgesteuerte Druck über die Rückführleitung rückgeführt wird und als erster Steuerdruck an dem ersten Steuereingang des ersten 3/2-Wege-ventils ausgesteuert wird. Auf diese Weise wird auch stromlos eine Selbsthaltung erreicht.

In diesen Varianten, in denen die Vorsteuereinheit monostabil ausgebildet ist, ist das Wechselventil vorzugsweise zwischen das Einlassventil und das erste ersten 3/2-Wege-Ventil geschaltet. Vorzugsweise ist dann der erste Wechselventilanschluss mit dem zweiten Einlassventilanschluss und der dritte Wechselventilanschluss mit dem ersten Steuereingang verbunden. Hierdurch wird eine besonders einfache Einsteuerung des Lösesteuerdrucks in die erste pneumatische Steuerleitung möglich zum Umsetzen einer Anti-Compound-Funktion.

In der weiteren bevorzugten Ausführungsform weist die elektropneumatische Vorsteuereinheit wenigstens ein drittes 3/2-Wegeventil zum Aussteuern eines zweiten Steuerdrucks auf. Zu diesem Zweck weist das dritte 3/2-Wegeventil einen Einlassanschluss, einen Arbeitsanschluss und einen Entlüftungsanschluss auf, und das dritte 3/2-Wegeventil ist dazu ausgebildet, wechselseitig den Arbeitsanschluss mit dem Einlassanschluss und dem Entlüftungsanschluss zu verbinden. Das dritte 3/2-Wegeventil ist vorzugsweise als elektronisch geschaltetes Ventil ausgebildet. In einer ersten Schaltstellung ist vorzugsweise der Eingangsanschluss mit dem Arbeitsanschluss verbunden und in einer zweiten Schaltstellung ist der Entlüftungsanschluss mit dem Arbeitsanschluss verbunden. Das dritte 3/2-Wegeventil ist vorzugsweise stromlos in der zweiten Schaltstellung.

Weiterhin ist bevorzugt, dass der Einlassanschluss des dritten 3/2-Wegeventils mit dem Vorratsanschluss, der Arbeitsanschluss des dritten 3/2-Wegenventils mit einem zweiten Steuereingang des 2/2-Wege-Sperrventils und der Entlüftungsanschluss des dritten 3/2-Wegeventils mit einer Entlüftung verbunden ist. In diesem Fall wird stromlos kein zweiter Steuerdruck ausgesteuert und bevorzugt ist dass 2/2-Wege-Sperrventil in der offenen Schaltstellung, wenn der zweite Steuerdruck den zweiten Grenzwert unterschreitet. Als zweiter Grenzwert kommt wiederum ein Druck im Bereich von etwa 0,25 MPa in Frage, wobei auch hier andere Grenzwerte genutzt werden können.

Um also einem Anhängersteuerventil (TCV) einen Steuerdruck zu übergeben, der dem Federspeicherbremsdruck am Federspeicheranschluss entspricht, weist das elektropneumatische Feststellbremsmodul gemäß dieser Ausführungsform den Anhängersteuerventilanschluss auf.

Vorzugsweise weist das elektropneumatische Feststellbremsmodul ein Anhängerventil auf, das mit dem Anhängersteuerventilanschluss verbunden ist und das dazu vorgesehen ist, in einer ersten Schaltstellung wenigstens den Federspeicherbremsdruck als Anhängersteuerdruck an dem Anhängersteueranschluss auszusteuern. Alternativ ist es auch möglich einen anderen, äquivalenten Druck, an dem Anhängersteuerventilanschluss auszusteuern.

Vorzugsweise wird der Federspeicherbremsdruck direkt an dem Anhängersteuerventilanschluss bereitgestellt, das heißt ohne Invertierung. Das am Anhängersteuerventilanschluss angeschlossene Anhängersteuerventil (TCV) muss den ausgesteuerten Druck dann invertieren, um einen entsprechenden Betriebsbremsdruck an den Betriebsbremsen des Anhängers bereit zu stellen.

Das Anhängerventil weist vorzugsweise eine zweite Schaltstellung auf, die zum Ausführen einer Anhängerkontrollstellungsfunktion vorgesehen ist. In der Anhängerkontrollstellung wird in der europäischen Anhängersteuerung überprüft, ob die Anhängerzugfahrzeugkombination auch ohne eingelegte Betriebsbremsen des Anhängers nur aufgrund der Federspeicherbremszylinder des Zugfahrzeugs sicher steht. Um diesen Zustand zu erreichen ist es folglich erforderlich einen Druck an dem Anhängersteuerventilanschluss auszusteuern, wenn der Federspeicheranschluss entlüftet ist. Das an den Anhängersteuerventilanschluss angeschlossene Anhängersteuerventil invertiert den ausgesteuerten Druck und lässt so die Betriebsbremsen des Anhängers drucklos, das heiß in einem offenen Zustand. Die Anhängerkontrollstellungsfunktion wird nur temporär ausgeführt und in der Regel von einer Fahrzeugkabine aus angesteuert. Der Fahrzeugführer betätigt die Anhängerkontrollstellungsfunktion um das sichere Stehen der Zugfahrzeuganhängerkombination zu überprüfen. Wenn festgestellt wird, dass die Zugfahrzeuganhängerkombination sicher steht, wird die Anhängerkontrollstellungsfunktion beendet und entsprechend das Anhängerventil in die erste Schaltstellung verbracht, sodass an dem Anhängersteuerventilanschluss wiederum der Federspeicherbremsdruck als Anhängersteuerdruck ausgesteuert wird.

In einer weiteren bevorzugten Ausführungsform ist das Anhängerventil als viertes 3/2-Wegeventil ausgebildet und weist einen ersten Anhängerventilanschluss, einen zweiten Anhängerventilanschluss und einen dritten Anhängerventilanschluss auf, wobei der erste Anhängerventilanschluss mit dem Vorratsanschluss, der zweite Anhängerventilanschluss mit dem Anhängersteuerventilanschluss und der dritte Anhängerventilanschluss mit einer Abzweigleitung verbunden ist, die von einer mit dem Federspeicheranschluss verbundenen Federspeicherbremsdruckleitung abzweigt.

Ferner ist bevorzugt, dass das Anhängerventil in einer stromlosen Stellung in der ersten Schaltstellung oder der zweiten Schaltstellung ist. Für den Fall, dass das Anhängerventil stromlos in der ersten Schaltstellung ist, ist das elektropneumatische Feststellbremsmodul für die europäische Anhängersteuerung ausgebildet. Für den Fall, dass das Anhängerventil stromlos in der zweiten Schaltstellung ist, ist das elektropneumatische Feststellbremsmodul für die skandinavische Anhängersteuerung ausgebildet. In der zweiten Variante wird stromlos der Vorratsdruck am Anhängersteuerventilanschluss ausgesteuert, sodass stromlos die Betriebsbremsen des Anhängers nicht eingebremst werden.

Weiterhin ist bevorzugt, dass das elektropneumatische Feststellbremsmodul eine elektrische Steuereinheit mit einem elektrischen Anschluss zum Empfang von Feststellbremssignalen und zum bereitstellen entsprechender Schaltsignale wenigstens an die Vorsteuereinheit aufweist. Der elektrische Anschluss zum Empfang von Feststellbremssignalen kann beispielsweise mit einem Fahrzeugbus verbunden sein, oder direkt über eine Verkabelung mit einem Parkbremsschalter bzw. Handbremsschalter in einer Fahrerkabine des Fahrzeugs.

Ferner ist bevorzugt, dass das elektropneumatische Feststellbremsmodul einen Drucksensor aufweist, der dazu vorgesehen ist, den Federspeicherbremsdruck zu erfassen und ein entsprechendes Signal bereit zu stellen. Vorzugsweise stellt der Drucksensor das Signal an der elektrischen Steuereinheit bereit. Die elektrische Steuereinheit kann das Signal an einen Fahrzeugbus oder dergleichen übergeben, oder selbstständig Verarbeiten. Über das von dem Drucksensor erfasste Signal kann ermittelt werden, ob die Federspeicherbremszylinder zugespannt oder offen sind.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 Ein Blockschaltbild eines elektropneumatischen Feststellbremsmoduls gemäß einem ersten Ausführungsbeispiel;
Fig. 2 ein Blockschaltbild eines elektropneumatischen Feststellbremsmoduls gemäß einem zweiten Ausführungsbeispiel;
Fig. 3 ein Blockschaltbild eines elektropneumatischen Feststellbremsmoduls gemäß einem dritten Ausführungsbeispiel; und
Fig. 4 ein Blockschaltbild eines elektropneumatischen Feststellbremsmoduls gemäß einem vierten Ausführungsbeispiel.

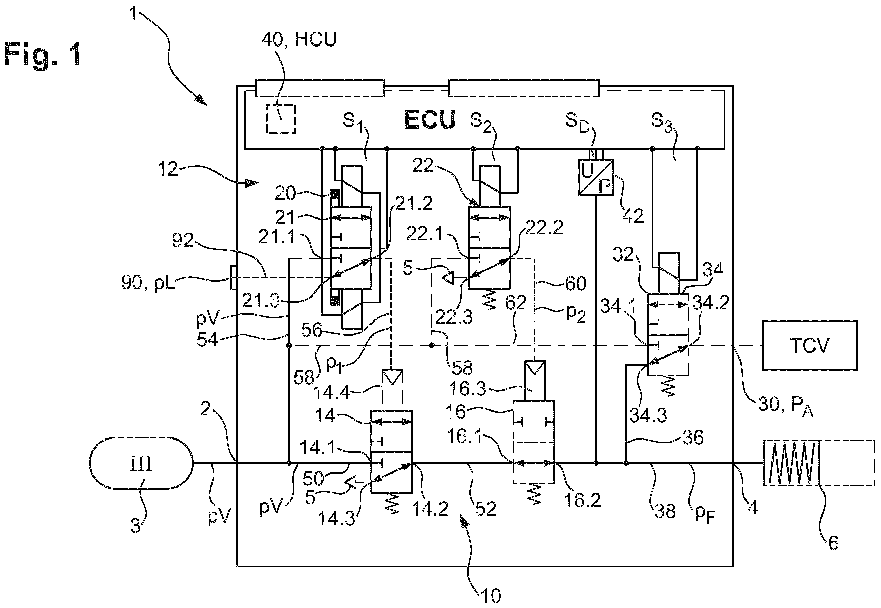

Ein elektropneumatisches Feststellbremsmodul 1 (Fig. 1) weist gemäß der Erfindung einen Vorratsanschluss 2 auf, an den ein Druckluftvorrat 3 angeschlossen ist. Der Druckluftvorrat 3 ist Teil eines Bremssystems eines Nutzfahrzeugs, das hier nicht weiter dargestellt ist. Insbesondere ist der Druckluftvorrat 3 Teil eines Feststellbremskreises.

Weiterhin weist das elektropneumatische Feststellbremsmodul 1 einen Federspeicheranschluss 4 auf, an den gemäß diesem Ausführungsbeispiel ein Federspeicherbremszylinder 6 angeschlossen ist. Es soll verstanden werden, dass es ebenso möglich ist zwei oder mehr, insbesondere vier oder mehr Federspeicherbremszylinder an den Federspeicheranschluss 4 anzuschließen.

Über den Vorratsanschluss 2 wird ein Vorratsdruck pV an dem elektropneumatischen Feststellbremsmodul 1 bereitgestellt und über den Federspeicheranschluss 4 wird ein Federspeicherbremsdruck pF an den Federspeicheranschluss 4 bereitgestellt. Die Federspeicher 6 sind dabei so ausgebildet, dass sie aufgrund einer Federkraft zuspannen, sodass ein positiver Federspeicherbremsdruck pF notwendig ist, um die Federspeicherbremszylinder 6 zu lösen. Bei Wegfall des Federspeicherbremsdrucks pF oder unterschreiten von einem Schwellwert, spannen die Federspeicherbremszylinder teilweise oder vollständig zu.

Um ausgehend vom Vorratsanschluss 2 den Federspeicherbremsdruck pF an dem Federspeicheranschluss 4 auszusteuern, weist das elektropneumatische Feststellbremsmodul 1 eine Einlass-Auslass-Ventileinheit 10 und eine elektropneumatische Vorsteuereinheit 12 auf. Die Einlass-Auslass-Ventileinheit 10 ist so schaltbar, dass der Federspeicherbremsdruck pF direkt von dem Vorratsanschluss 2 an den Federspeicheranschluss 4 durchsteuerbar ist. Dies wird im Weiteren noch detaillierter beschrieben werden. Dazu ist in einer Schaltstellung der Einlass-Auslass-Ventileinheit 10 der Federspeicheranschluss 4 direkt mit dem Vorratsanschluss 2 verbunden. In einer zweiten Schaltstellung der Einlass-Auslass-Ventileinheit 10 ist der Federspeicheranschluss 4 hingegen mit einer Entlüftung 5 verbunden um ein Zuspannen der Federspeicherbremszylinder 6 zu erlauben.

Die Einlass-Auslass-Ventileinheit 10 ist pneumatisch gesteuert und basierend auf einem ersten Steuerdruck p1 schaltbar. Sofern der erste Steuerdruck p1 unter einem ersten vorbestimmten Grenzwert liegt, beispielsweise 0,25 MPa, schaltet die Einlass-Auslass-Ventileinheit in die zweite Schaltstellung, in der der Federspeicheranschluss 4 entlüftbar ist, und so die Federspeicherbremszylinder 6 zugespannt werden.

Im Einzelnen weist die Einlass-Auslass-Ventileinheit 10 hierzu zunächst ein erstes 3/2-Wegeventil 14 auf, das pneumatisch steuerbar ist und einen Einlassanschluss 14.1, einen Arbeitsanschluss 14.2, einen Entlüftungsanschluss 14.3 und einen ersten Steuereingang 14.4 aufweist. Der Einlassanschluss 14.1 des ersten 3/2-Wegeventils 14 ist über eine erste pneumatische Leitung 50 mit dem Vorratsanschluss 2 verbunden. Der Entlüftungsanschluss 14.3 des ersten 3/2-Wegeventils 14 ist mit einer Entlüftung 5 verbunden, die eine zentrale Entlüftung 5 des elektropneumatischen Feststellbremsmoduls 1 sein kann. Der Arbeitsanschluss 14.2 des ersten 3/2-Wegeventils 14 ist mit einer pneumatischen Leitung 52 verbunden. Das erste 3/2-Wegeventil 14 weist eine erste in Fig. 1 nicht eingenommene Schaltstellung auf, in der der Einlassanschluss 14.1 des ersten 3/2-Wegeventils 14 mit dem Arbeitsanschluss 14.2 des ersten 3/2-Wegeventils 14 verbunden ist. Ferner weist das erste 3/2-Wegeventil 14 eine zweite Schaltstellung auf, die in der Fig. 1 eingenommen ist, und in der der Entlüftungsanschluss 14.3 des ersten 3/2-Wegeventils mit dem Arbeitsanschluss 14.2 des ersten 3/2-Wegeventils 14 verbunden ist. In dieser zweiten Schaltstellung ist der Arbeitsanschluss 14.2 des ersten 3/2-Wegeventils 14 und somit auch die pneumatische Leitung 52 entlüftbar. Das erste 3/2-Wegeventil 14 ist in die zweite Schaltstellung federbelastet vorgespannt. Durch entsprechende Anlage des ersten Steuerdrucks p1 an dem ersten Steuereingang 14.4 des ersten 3/2-Wegeventils 14 kann das erste 3/2-Wegeventil 14 in die erste, nicht gezeigte, Schaltstellung überführt werden, um in der pneumatischen Leitung 52 den Vorratsdruck pV auszusteuern.

In dem in Fig. 1 gezeigten Ausführungsbespiel ist die zweite pneumatische Leitung 52 mit einem ersten Sperrventilanschluss 16.1 eines 2/2-Wege-Sperrventils 16 verbunden. Der zweite Sperrventilanschluss 16.2 des 2/2-Wege-Sperrventils 16 ist mit einer Federspeicherbremsdruckleitung 38 verbunden, die ihrerseits mit dem Federspeicheranschluss 4 verbunden ist. Das heißt der Arbeitsanschluss 14.2 des ersten 3/2-Wegeventils 14 ist letztlich mit dem Federspeicheranschluss 4 verbunden, wenn das 2/2-Wege-Sperrventil 16 in der in Fig. 1 gezeigten offenen Schaltstellung ist. Das 2/2-Wege-Sperrventil 16 ist der Teil der Einlass-Auslass-Ventileinheit 10 und ebenso wie das erste 3/2-Wegeventil 14 pneumatisch gesteuert. Das 2/2-Wege-Sperrventil 16 ist federbelastet in die in Fig. 1 gezeigte zweite offene Schaltstellung vorgespannt. Das 2/2-Wege-Sperrventil 16 weist einen zweiten Steueranschluss 16.3 auf, an dem ein zweiter Steuerdruck p2 aussteuerbar ist.

Es soll verstanden werden, dass es auch Ausführungsformen gemäß der Erfindung geben kann, die kein 2/2-Wege-Sperrventil 16 nutzen, sondern bei denen vielmehr die Federspeicherbremsdruckleitung 38 direkt an den Arbeitsanschluss 14.2 des ersten 3/2-Wegeventils angeschlossen ist.

Das 2/2-Wege-Sperrventil 16 dient in erster Linie dem gestuften Be- und Entlüften des Federspeicheranschlusses 4. Ist das erste 3/2-Wegeventil 14 in der in Fig. 1 gezeigten zweiten Schaltstellung, ist der erste Sperrventilanschluss 16.1 mit der Entlüftung 5 verbunden. Wird nun das 2/2-Wege-Sperrventil 16 in die erste in Fig. 1 nicht gezeigte Schaltstellung gebracht, wird trotz der Schaltung des ersten 3/2-Wegeventils 14 in die zweite in der Fig. 1 gezeigte Schaltstellung der Federspeicheranschluss 4 nicht entlüftet. Erst bei Schalten des 2/2-Wege-Sperrventils 16 in die zweite in Fig. 1 gezeigte Schaltstellung, würde der Federspeicheranschluss 4 entlüftet. Beispielsweise zum Hilfsbremsen kann nun das 2/2-Wege-Sperrventil 16 gepulst von der ersten in Fig. 1 nicht gezeigten Schaltstellung in die zweite in Fig. 1 gezeigte Schaltstellung verbracht werden, um den Federspeicheranschluss 4 gestuft zu entlüften und die Federspeicherbremszylinder 6 teilweise und temporär zuzuspannen.

Die elektropneumatische Vorsteuereinheit 12 dient dazu, wenigstens den ersten Steuerdruck p1 auszusteuern und an der Einlass-Auslass-Ventileinheit 10 bereitzustellen, um die Einlass-Auslass-Ventileinheit 10 dazu zu veranlassen, zu schalten, und einen entsprechenden Federspeicherbremsdruck pF an dem Federspeicheranschluss 4 auszusteuern. Genauer gesagt veranlasst die Vorsteuereinheit 12 durch Aussteuerung des ersten Steuerdrucks p1, das erste 3/2-Wegeventil 14 von der zweiten Schaltstellung in die erste Schaltstellung zu wechseln, wenn der ausgesteuerte erste Steuerdruck p1 den ersten vorgegebenen Grenzwert annimmt oder überschreitet. Sofern das elektropneumatische Feststellbremsmodul 1 ein 2/2-Wege-Sperrventil 16 aufweist, und sofern dieses 2/2-Wege-Sperrventil 16 pneumatisch gesteuert ausgebildet ist, ist die elektropneumatische Vorsteuereinheit 12 vorzugsweise auch dazu ausgebildet, den zweiten Steuerdruck p2 auszusteuern und an der Einlass-Auslass-Ventileinheit 10, vorzugsweise an dem zweiten Steuereingang 16.3 des 2/2-Wege-Sperrventils 16 auszusteuern.

Zu diesem Zweck weist die elektropneumatische Vorsteuereinheit 12 zunächst ein zweites 3/2-Wegeventil 20 auf, welches zum Aussteuern des ersten Steuerdrucks p1 mit dem Vorratsanschluss 2 verbunden ist.

Genauer gesagt, ist das zweite 3/2-Wegeventil 20 in dieser Ausführungsform als Bistabilventil 21 ausgebildet und weist einen ersten Bistabilventilanschluss 21.1, einen zweiten Bistabilventilanschluss 21.2 und einen dritten Bistabilventilanschluss 21.3 auf. Das Bistabilventil 21 weist eine erste in Figur 1 nicht gezeigte Schaltstellung auf, in der der erste Bistabilventilanschluss 21.1 mit dem zweiten Bistabilventilanschluss 21.2 verbunden ist, und eine zweite, in Figur 1 gezeigte Schaltstellung, in der der zweite Bistabilventilanschluss 21.2 mit dem dritten Bistabilventilanschluss 21.3 verbunden ist. Der erste Bistabilventilanschluss 21.1 ist mit dem Vorratsanschluss 2 verbunden. Genauer gesagt ist der erste Bistabilventilanschluss 21.1 über eine dritte pneumatische Leitung 54 mit dem Vorratsanschluss 2 verbunden, wobei die dritte pneumatische Leitung 54 von der ersten pneumatischen Leitung 50 abzweigt. Insofern liegt an dem ersten Bistabilventilanschluss 21.1 der Vorratsdruck pV an. Der zweite Bistabilventilanschluss 21.2 hingegen ist mit einer ersten pneumatischen Steuerleitung 56 verbunden, in die der erste pneumatische Steuerdruck p1 ausgesteuert wird. Die erste pneumatische Steuerleitung 56 ist andererseits mit dem ersten Steuereingang 14.4 des ersten 3/2-Wegeventils 14 verbunden.

Das Bistabilventil 21 ist so ausgebildet, dass es sowohl in der ersten in Figur 1 nicht gezeigten Schaltstellung als auch in der zweiten in Figur 1 gezeigten Schaltstellung stabil ist. Dies wird durch einen Permanentmagneten erreicht, der den Ventilanker entsprechend in den Schaltstellungen hält. Das heißt, das Bistabilventil 21 kann stromlos sowohl in der ersten als auch in der zweiten Schaltstellung verbleiben.

Für den Fall, dass eingelegte Federspeicherbremsen 6 gelöst werden sollen, ohne den ersten Steuerdruck p1 auszusteuern oder aussteuern zu können, weist das elektropneumatische Feststellbremsmodul 1 gemäß der vorliegenden Offenbarung einen Lösesteueranschluss 90 auf. In der in Figur 1 gezeigten Ausführungsform ist der dritte Bistabilventilanschluss 21.3 mit dem Lösesteueranschluss 90 verbunden, in diesem Ausführungsbeispiel konkret über eine Lösesteuerleitung 92. Der Lösesteueranschluss 90 übernimmt in dieser Ausführungsform auch die Funktion einer Entlüftung, um die erste pneumatische Steuerleitung 56 und damit den ersten pneumatischen Steueranschluss 14.4. zu entlüften, wenn das Bistabilventil 21 in der in Figur 1 gezeigten Schaltstellung ist.

Um nun, beispielsweise bei Ausfall der elektronischen Steuereinheit ECU, die Federspeicherbremsen 6 lösen zu können, also zu belüften, kann an dem Lösesteueranschluss 90 ein Lösesteuerdruck pL ausgesteuert werden. Dies kann manuell geschehen, indem von einem Servicemitarbeiter oder dem Führer des Fahrzeugs ein Druckluftbehälter angeschlossen wird. Zuvor kann ein Rückschlagventil in den Lösesteueranschluss 90 eingeschraubt werden. Dazu weist der Lösesteueranschluss 90 vorzugsweise ein entsprechendes Gewinde auf. Der Lösesteueranschluss 90 kann im Normalbetrieb auch mit einem Schalldämpfer versehen sein, der dann bevor der Druckluftbehälter angeschlossen wird, bzw. das Rückschlagventil eingeschraubt wird, abgenommen wird.

Gemäß diesem Ausführungsbeispiel wird also der Entlüftungspfad des ersten Steueranschlusses 14.4. ersten 3/2-Wegeventils 14 auch zum Aussteuern des Lösesteuerdrucks pL verwendet.

Zur Aussteuerung des zweiten Steuerdrucks p2 weist die elektropneumatische Vorsteuereinheit 12 gemäß diesem Ausführungsbeispiel ein drittes 3/2-Wegeventil 22 auf. Das dritte 3/2-Wegeventil 22 ist mit dem Vorratsanschluss 2, einer Entlüftung 5 und dem zweiten Steuereingang 16.3 des 2/2-Wege-Sperrventils 16 verbunden.

Im Einzelnen weist das dritte 3/2-Wegeventil 22 einen Einlassanschluss 22.1 einen Arbeitsanschluss 22.2 sowie einen Entlüftungsanschluss 22.3 auf. Der Einlassanschluss 22.1 des dritten 3/2-Wegeventils 22 ist mit einer vierten pneumatischen Leitung 58 verbunden. Die dritte pneumatische Leitung 58 zweigt aus der zweiten pneumatischen Leitung 54 ab. Das heißt, auch an dem Einlassanschluss 22.1 des dritten 3/2-Wegeventils 22 liegt der Vorratsdruck pV an.

Der Arbeitsanschluss 22.2 des dritten 3/2-Wegeventils 22 ist mit einer zweiten pneumatischen Steuerleitung 60 verbunden, die ihrerseits zum zweiten Steuereingang 16.3 des 2/2-Wege-Sperrventils 16 führt. An dem Arbeitsanschluss 22.2 des dritten 3/2-Wegeventils 22 wird folglich der zweite Steuerdruck p2 ausgesteuert. Der Entlüftungsanschluss 22.3 des dritten 3/2-Wegeventils 22 ist mit einer Entlüftung 5, insbesondere der zentralen gemeinsamen Entlüftung des elektropneumatischen Feststellbremsmoduls 1 verbunden.

Das elektropneumatische Feststellbremsmodul 1 weist eine elektrische Steuereinheit ECU auf. Die elektrische Steuereinheit ECU ist dazu vorgesehen, ein Stellsignal S1 an dem zweiten 3/2-Wegeventil, insbesondere Bistabilventil 21 bereitzustellen, um dieses zwischen den ersten und zweiten Schaltstellungen zu schalten. Ferner ist die elektrische Steuereinheit ECU dazu ausgebildet, ein zweites Stellsignal S2 an dem dritten 3/2-Wegeventil 22 bereitzustellen, um das dritte 3/2-Wegeventil 22 von der zweiten in Figur 1 gezeigten Schaltstellung in die erste in Figur 1 nicht gezeigten Schaltstellung zu versetzen. In der ersten in Figur 1 nicht gezeigten Schaltstellung ist der Einlassanschluss 22.1 des dritten 3/2-Wegeventils 22 mit dem Arbeitsanschluss 22.2 des dritten 3/2-Wegeventils 22 verbunden, sodass der zweite Steuerdruck p2 ausgesteuert wird und in der Folge bei Überschreiten des zweiten Grenzwerts das 2/2-Wege-Sperrventil 16 schaltet und so den zweiten Sperrventilanschluss 16.2 gegenüber dem ersten Sperrventilanschluss 16.1 absperrt.

Die elektrische Steuereinheit ECU weist ferner einen elektronischen Anschluss 40 auf, an den mindestens ein Fahrzeugbus, oder ein HCU-Schalter direkt angeschlossen sein können. Wird beispielsweise ein Fahrzeug, das das elektromagnetische Feststellbremsmodul 1 aufweist gestartet, wird vorzugsweise an dem elektronischen Anschluss 40 ein Signal bereitgestellt, dass die Federspeicherbremszylinder 6 gelöst werden sollen. Die elektrische Steuereinheit ECU generiert basierend auf dem empfangenen Signal das Signal S1 und schaltet das zweite 3/2-Wegeventil 20 in die erste nicht gezeigte Schaltstellung, um den ersten Steuerdruck p1 auszusteuern, sodass das erste 3/2-Wegeventil 14 ebenfalls in die zweite nicht gezeigte Schaltstellung geschaltet wird, um den Federspeicherbremsdruck pF auszusteuern, sodass der Federspeicheranschluss 4 belüftet wird. In dieser Folge werden die an den Federspeicheranschluss 4 angeschlossenen Federspeicherbremszylinder 6 belüftet und gelöst. Das Fahrzeug kann sich in Bewegung setzen.

Das zweite Signal S2 wird basierend auf über den elektronischen Anschluss 40 empfangenen Hilfsbremsanforderungssignalen ausgelöst und dient dazu, das dritte 3/2-Wegeventil 22 und in Folge, das 2/2-Wege-Sperrventil 16 zu schalten, um die Federspeicherbremszylinder 6, die an den Federspeicheranschluss 4 angeschlossen sind, gestuft zu entlüften.

Die in Figur 1 gezeigte erste Ausführungsform des elektropneumatischen Feststellbremsmoduls 1 erlaubt auch eine Anhängerkontrollstellungsfunktion.

Bei Zugfahrzeuganhängerkombinationen ist es bevorzugt, dass die Betriebsbremsen des Anhängers in Übereinstimmung mit den Federspeicherbremszylindern 6 des Zugfahrzeugs eingebremst werden. Hierbei wird grundsätzlich zwischen der sogenannten europäischen Anhängersteuerung und der sogenannten skandinavischen Anhängersteuerung unterschieden. Währen bei der europäischen Anhängersteuerung die Betriebsbremsen des Anhängers im geparkten Zustand des Fahrzeugs permanent eingebremst sein sollen, wird bei der skandinavischen Anhängersteuerung gefordert, dass im geparkten Zustand der Zugfahrzeuganhängerkombination die Betriebsbremsen des Anhängers gelöst werden, um ein Einfrieren zu verhindern. Dennoch wird auch bei einer skandinavischen Anhängersteuerung gefordert, dass für andere Fälle, in denen die Federspeicherbremszylinder 6 des Zugfahrzeugs aktiviert werden, das heißt zugespannt werden, die Betriebsbremsen des Anhängers ebenfalls eingebremst werden.

Zu diesem Zweck weist das elektropneumatische Feststellbremsmodul 1 gemäß dieser Ausführungsform einen Anhängersteuerventilanschluss 30 sowie ein Anhängerventil 32 auf. An dem Anhängersteuerventilanschluss 30 wird ein Anhängersteuerdruck pA ausgesteuert, der dem Federspeicherbremsdruck pF entspricht, oder ein äquivalenter Druck hierzu ist. An den Anhängersteuerventilanschluss 30 ist ein Anhängersteuerventil TCV anschließbar, welches den bereitgestellten Anhängersteuerdruck pA invertiert und dann invers an Betriebsbremsen eines Anhängerwagens (nicht gezeigt) aussteuert.

Das Anhängerventil 32 dient zur Umsetzung der Anhängerkontrollstellungsfunktion. Zu diesem Zweck ist das Anhängerventil 32 in dieser Ausführungsform (Figur 1) als viertes 3/2-Wegeventil 34 ausgebildet und weist einen ersten Anhängerventilanschluss 34.1, einen zweiten Anhängerventilanschluss 34.2 und einen dritten Anhängerventilanschluss 34.3 auf. In einer ersten in Figur 1 nicht gezeigten Schaltstellung ist der erste Anhängerventilanschluss 34.1 mit dem zweiten Anhängerventilanschluss 34.2 verbunden. In einer zweiten, in Figur 1 gezeigten Schaltstellung, ist der zweite Anhängerventilanschluss 34.2 mit dem dritten Anhängerventilanschluss 34.3 verbunden. Der erste Anhängerventilanschluss ist mit einer vierten pneumatischen Leitung 62 verbunden, die von der dritten pneumatischen Leitung 58 abzweigt. Insofern liegt an dem ersten Anhängerventilanschluss 34.1 der Vorratsdruck pV an. Der zweite Anhängerventilanschluss 34.2 ist mit dem Anhängerventilanschluss 30 verbunden. Der dritte Anhängerventilanschluss 34.3 ist über eine Abzweigleitung 36 mit der Federspeicherbremsdruckleitung 38 verbunden, in die der Federspeicherbremsdruck pF ausgesteuert ist. Das heißt an dem dritten Anhängerventilanschluss 34.3 liegt der Federspeicherbremsdruck pF an.

Mittels des Anhängerventils 32 kann nun an dem Anhängersteuerventilanschluss 30 entweder der Vorratsdruck pV oder der Federspeicherbremsdruck pF ausgesteuert werden. Für den Fall, dass der Federspeicherbremsdruck pF als Anhängersteuerdruck PA ausgesteuert wird, werden die Betriebsbremsen des Anhängerwagens in Übereinstimmung mit den Federspeicherbremszylindern 6 gesteuert. Das heißt, wenn die Federspeicherbremszylinder 6 zuspannen, werden auch die Betriebsbremsen des Anhängerwagens zugespannt. Um dies zu verhindern, kann mittels eines dritten Signals S3 von der elektrischen Steuereinheit ECU das Anhängerventil 32 in die erste Schaltstellung gebracht werden, sodass an dem Anhängersteuerventilanschluss 30 als Anhängersteuerdruck PA der Vorratsdruck pV ausgesteuert wird. In diesem Fall bleiben die Betriebsbremsen des Anhängerwagens gelöst.

Das in Figur 1 gezeigte Ausführungsbeispiel nutzt ein Anhängerventil 32, welches stromlos in der zweiten in Figur 1 gezeigten Schaltstellung ist, und somit stromlos den Federspeicherbremsdruck pF als Anhängersteuerdruck pA aussteuert. Das in Figur 1 gezeigte Ausführungsbeispiel setzt somit die europäische Anhängersteuerung um, in der in einem geparkten Zustand des Fahrzeugs (stromloser Zustand) der Anhängerwagen in Übereinstimmung mit den Federspeicherbremszylindern 6 des Zugfahrzeugs eingebremst sind.

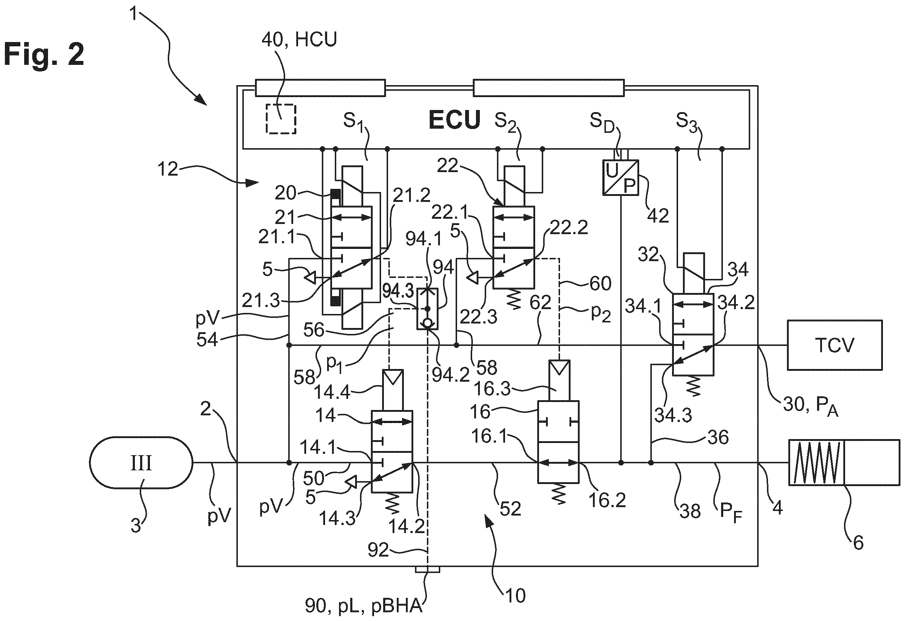

Figur 2 zeigt ein weiteres Ausführungsbeispiel des elektropneumatischen Feststellbremsmoduls 1, wobei in den Figuren 1 und 2 gleiche und ähnliche Elemente mit den gleichen Bezugszeichen versehen sind. Insofern wird vollumfänglich auf die obige Beschreibung zum ersten Ausführungsbeispiel Bezug genommen. Im Folgenden werden insbesondere die Unterschiede zum ersten Ausführungsbeispiel (Fig. 1) hervorgehoben und erläutert.

Das elektropneumatische Feststellbremsmodul 1 des zweiten Ausführungsbeispiels (Fig. 2) weist ebenso wie das elektropneumatische Feststellbremsmodul 1 des ersten Ausführungsbeispiels einen Lösesteueranschluss 90 auf, der im Inneren des elektropneumatischen Feststellbremsmoduls 1 mit einer Lösesteuerleitung 92 verbunden ist. Diese ist aber nicht mit dem dritten Bistabilventilanschluss 21.3 verbunden. Der dritte Bistabilventilanschluss 21.3 ist in diesem Ausführungsbeispiel (Fig. 2) vielmehr mit einer Entlüftung 5 verbunden oder verbindbar.

In dieser Ausführungsform (Fig. 2) wird der Lösesteuerdruck pL direkt in die erste pneumatische Steuerleitung 56 ausgesteuert. Um dies zu vereinfachen ist ein Wechselventil 94 vorgesehen, welche zwischen das Bistabilventil 21 und das erste 3/2-Wegeventil 14 geschaltet ist, genauer gesagt in die erste pneumatische Steuerleitung 56 eingesetzt ist. Das Wechselventil 94 weist einen ersten Wechselventilanschluss 94.1, einen zweiten Wechselventilanschluss 94.2 und einen dritten Wechselventilanschluss 94.3 auf. Der erste Wechselventilanschluss 94.1 ist über einen ersten Abschnitt der ersten pneumatischen Steuerleitung 56 mit dem zweiten Bistabilventilanschluss 21.2 verbunden. Der zweite Wechselventilanschluss 94.2 ist mit der Lösesteuerleitung 92 verbunden. Der dritte Wechselventilanschluss 94.3 ist über einen zweiten Abschnitt der ersten pneumatischen Steuerleitung 56 mit dem ersten Steuereingang 14.4 des ersten 3/2-Wegeventils 14 verbunden. Das Wechselventil 94 ist so ausgebildet, dass die Verbindung zwischen dem ersten und dritten Wechselventilanschluss 94.1, 94.3 im Normalbetrieb offen ist. Erst wenn der Lösesteuerdruck pL einen bestimmten Schwellwert überschreitet, wird der zweite Wechselventilanschluss 94.2 geöffnet und im Wechsel der erste Wechselventilanschluss 94.1 geschlossen. Auch auf diese Weise lässt sich der Lösesteuerdruck pL über das Wechselventil 94 an dem ersten Steueranschluss 14.4 aussteuern, um das erste 3/2-Wegeventil 14 zu schalten und so den federspeicherbremsdruck pF am Federspeicheranschluss 4 auszusteuern.

Während sich das erste Ausführungsbeispiel nur zu Zwecken der Notlösefunktion eignet, da der Lösesteueranschluss 90 im Normalbetrieb zur Entlüftung des Bistabilventils 21 benötigt wird, lässt sich das elektropneumatische Feststellbremsmodul 1 gemäß dem zweiten Ausführungsbeispiel auch im Rahmen einer Anit-Compound-Schaltung einsetzen, bei der (dauerhaft) eine Steuerleitung mit dem Lösesteueranschluss 90 verbunden wird, die an diesem einen Betriebsbremsdruck pBHA einer mit Federspeicherbremsen 6 versehenen Achse, z.B. einer Hinterachse, aussteuert. Auf diese Weise kann vermieden werden, dass an dieser Achse sowohl die Betriebsbremsen als auch die Federspeicherbremsen 6 gleichzeitig zugespannt werden. Hierdurch kann eine Blockierung der betreffenden Achse vermieden werden. Alternativ oder zusätzlich kann der Lösesteueranschluss 90 im zweiten Ausführungsbeispiel aber auch für eine Notlösefunktion verwendet werden.

In einer nicht dargestellten Variante ist ein zusätzliches Rückschlagventil direkt stromabwärts des Vorratsanschlusses 2 vorgesehen, um ein Strömen von Fluid zurück zum Vorratsanschluss 2 zu vermeiden.

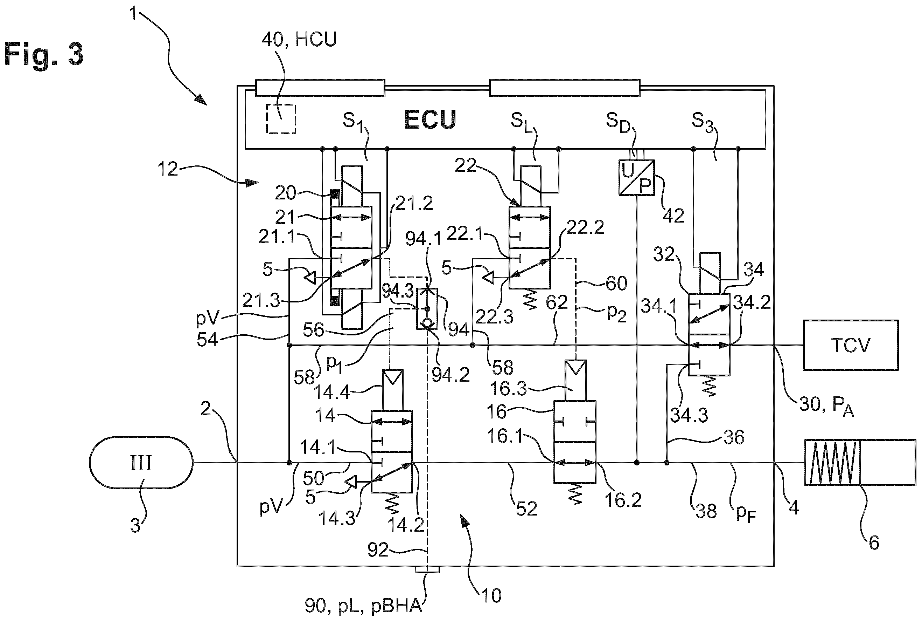

Eine Variante zu dem zweiten Ausführungsbeispiel (Figur 2), nämlich die skandinavische Anhängersteuerung, ist in Figur 3 gezeigt. Wie sich aus Figur 3 ergibt, besteht der einzige Unterschied in dem dritten Ausführungsbeispiel des elektropneumatischen Feststellbremsmoduls 1 darin, dass die Schaltstellungen des Anhängerventils 32 umgekehrt sind. Das heißt, das Anhängerventil 32 gemäß dem dritten Ausführungsbeispiel (Figur 3) ist stromlos in der im ersten Ausführungsbeispiel (Figur 1) als erste Schaltstellung bezeichneten Schaltstellung und verbindet somit stromlos den ersten Anhängerventilanschluss 34.1 mit dem zweiten Anhängerventilanschluss 34.2, sodass stromlos der Vorratsdruck pV als Anhängersteuerdruck pA ausgesteuert wird und somit die Betriebsbremsen des Anhängerwagens im stromlosen Zustand (geparktem Zustand) gelöst sind.

Im Rahmen der Erfindung lässt sich also auf besonders einfache Art und Weise mit dem elektropneumatischen Feststellbremsmodul 1 sowohl die europäische Anhängersteuerung als auch die skandinavische Anhängersteuerung umsetzen.

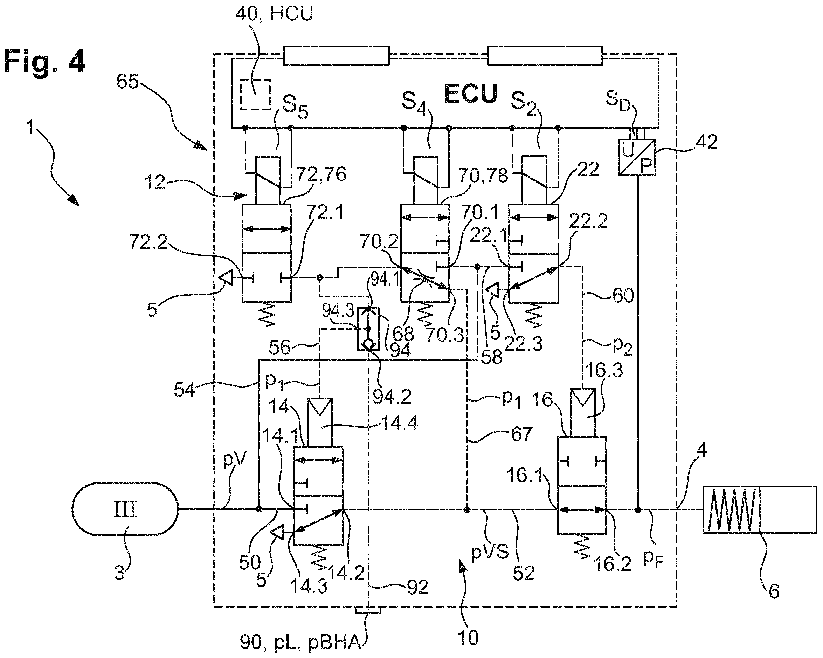

Das vierte Ausführungsbeispiel gemäß Figur 4 zeigt nun ein elektropneumatisches Feststellbremsmodul 1, wie es grundsätzlich aus den vorherigen Ausführungsbeispielen 2 und 3 (Figuren 2 und 3) bekannt ist. Allerdings ist das Bistabilventil 21 durch eine monostabile Einlass-Auslass-Ventilkombination 65 ersetzt. Ferner ist das elektropneumatische Feststellbremsmodul 1 nicht für ein Anhängersteuerventil TCV vorbereitet. Dies ist dann bevorzugt, wenn das elektropneumatische Feststellbremsmodul 1 in Nutzfahrzeugen eingesetzt werden soll, die keinen Anhänger ziehen, bzw. einen eventuellen Anhänger nicht mit Druckluft versorgen müssen. Daher können in solchen Ausführungsbeispielen der Anhängersteuerventilanschluss 30, das Anhängerventil 32, die Abzweigleitung 36 und die vierte pneumatische Leitung 62 ersatzlos entfallen. Auch wenn diese Elemente bei allen vorherigen Ausführungsformen gezeigt sind, soll verstanden werden, dass sie nur optional und nicht essentiell für die Erfindung sind, und auch bei den ersten drei Ausführungsbeispielen entfallen können. Ferner soll verstanden werden, dass die Erfindung auch auf Varianten angewandt werden kann, bei denen das Feststellbremsmodul 1 nicht nur für ein Anhängersteuerventil TCV vorbereitet, sondern mit diesem wenigstens teilweise integriert ist. Auch hierbei können dann entsprechende Anschlüsse und/oder Ventile entfallen.

Zunächst wird mit Bezug auf Figur 4 in dem vierten Ausführungsbeispiel ein besonders einfaches Schaltungslayout beschrieben. Die monostabile Einlass-Auslass-Ventilkombination 65 weist ein Einlassventil 70 und ein Auslassventil 72 auf. Das Einlassventil 70 ist in diesem Ausführungsbeispiel als 3/2-Wege-Einlassventil 78 ausgebildet und weist einen ersten Einlassventilanschluss 70.1, einen zweiten Einlassventilanschluss 70.2, und einen dritten Einlassventilanschluss 70.3 auf. Das Einlassventil 70 ist als monostabiles Ventil ausgebildet und ist in die in Figur 4 gezeigte erste Schaltstellung vorgespannt. Durch Bereitstellung eines vierten Schaltsignals S4 ist das Einlassventil 70 von der ersten in Figur 4 gezeigten Schaltstellung in die zweite in Figur 4 nicht gezeigte Schaltstellung schaltbar. In der zweiten in Figur 4 nicht gezeigten Schaltstellung ist der erste Einlassventilanschluss 70.1 mit dem zweiten Einlassventilanschluss 70.2 verbunden.

Der zweite Einlassventilanschluss 70.2 ist mit der ersten pneumatischen Steuerleitung 56 verbunden, die, wie bereits mit Bezug auf die Ausführungsbeispiele 2 und 3 beschrieben wurde, zu dem ersten Steueranschluss 14.4 des ersten 3/2-Wegeventils führt und in die das Wechselventil 94 eingesetzt ist. Durch Schalten des Einlassventils 70 lässt sich folglich der erste Steuerdruck p1 aussteuern. Das Wechselventil 94 ist, wie schon mit Bezug auf die Figuren 2 und 3 beschrieben wurde über den zweiten Wechselventilanschluss 94.2 mit der Lösesteuerleitung 92 verbunden, sodass das Wechselventil 94 jeweils den höheren des ersten Steuerdrucks p1 und des Lösesteuerdrucks pL an dem dritten Wechselventilanschluss 94.3 aussteuert und an dem ersten Steueranschluss 14.4 bereitstellt. Sobald dieser an dem ersten Steueranschluss 14.4 bereitgestellte Druck den ersten Schwellwert überschreitet, schaltet das erste 3/2-Wegeventil 14 in die zweite in Figur 4 nicht gezeigte Schaltstellung, und an dem Arbeitsanschluss 14.2 wird der Arbeitsdruck pVS ausgesteuert, der dann als Federspeicherbremsdruck pF bereitgestellt werden kann, wenn das 2/2-Wege-Sperrventil 16 in der in Figur 4 gezeigten offenen Schaltstellung ist. Die Federspeicherbremsen 6 werden in der Folge gelöst.

Um eine pneumatische Selbsthaltung des ersten 3/2-Wegeventils 14 zu erreichen, wurde in den ersten drei Ausführungsbeispielen (Figuren 1 bis 3) das Bistabilventil 21 eingesetzt, welches sowohl in der ersten als auch in der zweiten Schaltstellung stabil ist. Die monostabile Einlass-Auslass-Ventilkombination 65 ist allerdings nicht in der offenen Schaltstellung stabil, sondern in der geschlossenen. Aus diesem Grund weist das elektropneumatische Feststellbremsmodul 1 gemäß dem vierten Ausführungsbeispiel (Figur 4) eine Rückführleitung 67 auf, die den von dem ersten 3/2-Wegeventil 14 ausgesteuerten Arbeitsdruck pVS zum ersten Steuereingang 14.4 rückführt und dort als ersten Steuerdruck p1 bereitstellt. Auf diese Weise wird der erste Steuerdruck p1 aufrechterhalten. Eine pneumatische Selbsthaltung ist erreicht. Zu diesem Zweck ist die Rückführleitung 67 an den dritten Einlassventilanschluss 70.3 angeschlossen.

Um bei leichten Druckschwankungen am Federspeicheranschluss 4 die pneumatische Selbsthaltung nicht unmittelbar aufzulösen und ein Wechsel der Schaltzustände zu ermöglichen, ist in der Rückführleitung 67, genauer gesagt in dem Einlassventil 70, gemäß diesem Ausführungsbeispiel (Figur 4) eine Drossel 68 angeordnet.

Zum Entlüften des ersten Steuereingangs 14.4, um das erste 3/2-Wegeventil 14 in die in Figur 4 gezeigte erste Schaltstellung zurückfallen zu lassen, ist das Auslassventil 72 vorgesehen. Dieses ist gemäß dem vierten Ausführungsbeispiel (Figur 4) als 2/2-Wege-Auslassventil 76 ausgebildet. Es weist einen ersten Auslassventilanschluss 72.1 und einen zweiten Auslassventilanschluss 72.2 auf. Der erste Auslassventilanschluss 72.1 ist mit der ersten pneumatischen Steuerleitung 56 verbunden, und der zweite Auslassventilanschluss 72.2 ist mit einer Entlüftung 5 verbunden. Das 2/2-Wege-Auslassventil 76 ist stromlos in der in Figur 4 gezeigten geschlossenen ersten Schaltstellung. Durch ein entsprechendes fünftes Schaltsignal S5 lässt sich das 2/2-Wege-Auslassventil 76 in die in Figur 4 nicht gezeigte zweite offene Schaltstellung verbringen, in der der erste Auslassventilanschluss 72.1 mit dem zweiten Auslassventilanschluss 72.2 verbunden ist. Auf diese Weise lässt sich die erste pneumatische Steuerleitung 56 und somit der erste Steueranschluss 14.4 entlüften, sodass das erste 3/2-Wegeventil 14 in die in Figur 4 gezeigte erste Schaltstellung zurückfallen kann. Infolgedessen wird der Federspeicheranschluss 4 entlüftet, wenn auch das Sperrventil 16 in der in Figur 4 gezeigten offenen Schaltstellung ist.

In alternativen, nicht gezeigten Ausführungsformen können sowohl das Auslassventil 72 als auch das Einlassventil 70 als 2/2-Wege-Ventil ausgebildet sein. In einem solchen Fall müsste die Rückführleitung 67 dann an dem Einlassventil 70 vorbei direkt mit der ersten pneumatischen Steuerleitung 56 verbunden werden, beispielsweise mittels eines T-Stücks.

Ebenso ist es möglich, das Auslassventil 72 als 3/2-Wege-Ventil und das Einlassventil 70 als 2/2-Wegeventil auszubilden. Dann würde es sich anbieten, die Rückführleitung 67 analog zum vierten Ausführungsbeispiel mit dem dritten Anschluss des Auslassventils 72 zu verbinden, sodass das als 3/2-Wege-Ventil ausgebildete Auslassventil mit der Entlüftung 5, der ersten pneumatischen Steuerleitung 56 und der Rückführleitung 67 verbunden ist, wobei stromlos die Rückführleitung 67 mit der ersten pneumatischen Steuerleitung 56 verbunden sein sollte, um eine sichere Selbsthaltung zu realisieren.

### Bezugszeichenliste (Teil der Beschreibung)

- 1: elektropneumatisches Feststellbremsmodul
- 2: Vorratsanschluss
- 3: Druckluftvorrat
- 4: Federspeicheranschluss
- 5: Entlüftung
- 6: Federspeicherbremszylinder
- 10: Einlass-Auslass-Ventileinheit
- 12: elektropneumatische Vorsteuereinheit
- 14: erstes 3/2-Wegeventil
- 14.1: Einlassanschluss des ersten 3/2-Wegeventils
- 14.2: Arbeitsanschluss des ersten 3/2-Wegeventils
- 14.3: Entlüftungsanschluss des ersten 3/2-Wegeventils
- 14.4: erster Steuereingang des ersten 3/2-Wegeventils
- 16: 2/2-Wege-Sperrventil
- 16.1: erster Sperrventilanschluss
- 16.2: zweiter Sperrventilanschluss
- 16.3: zweiter Steuereingang
- 20: zweites 3/2-Wegeventil
- 21: Bistabilventil
- 21.1: erster Bistabilventilanschluss
- 21.2: zweiter Bistabilventilanschluss
- 21.3: dritter Bistabilventilanschluss
- 22: drittes 3/2-Wegeventil
- 22.1: Einlassanschluss des dritten 3/2-Wegeventils
- 22.2: Arbeitsanschluss des dritten 3/2-Wegeventils
- 22.3: Entlüftungsanschluss des dritten 3/2-Wegeventils
- 30: Anhängersteuerventilanschluss
- 32: Anhängerventil
- 34: viertes 3/2-Wegeventil
- 34.1: erster Anhängerventilanschluss
- 34.2: zweiter Anhängerventilanschluss
- 34.3: dritter Anhängerventilanschluss
- 36: Abzweigleitung
- 38: Federspeicherbremsdruckleitung
- 40: elektronischer Anschluss
- 50: erste pneumatische Leitung
- 52: zweite pneumatische Leitung
- 54: dritte pneumatische Leitung
- 56: erste pneumatische Steuerleitung
- 58: dritte pneumatische Leitung
- 60: zweite pneumatische Steuerleitung
- 62: vierte pneumatische Leitung
- 65: monostabile Einlass-Auslass-Ventilkombination
- 67: Rückführleitung
- 68: Drossel
- 70: Einlassventil
- 70.1: erster Einlassventilanschluss
- 70.2: zweiter Einlassventilanschluss
- 70.3: dritter Einlassventilanschluss
- 72: Auslassventil
- 72.1: erster Auslassventilanschluss
- 72.2: zweiter Auslassventilanschluss
- 76: 2/2-Wege-Auslassventil
- 78: 3/2-Wege-Einlassventil
- 90: Lösesteueranschluss
- 92: Lösesteuerleitung
- 94: Wechselventil
- 94.1: erster Wechselventilanschluss
- 94.2: zweiter Wechselventilanschluss
- 94.3: dritter Wechselventilanschluss
- ECU: elektronische Steuereinheit
- pA: Anhängersteuerdruck
- pV: Vorratsdruck
- pF: Federspeicherbremsdruck
- pBHA: Betriebsbremsdruck Hinterachse
- p1: erster Steuerdruck
- p2: zweiter Steuerdruck
- pL: Lösesteuerdruck
- S1: erstes Schaltsignal
- S2: zweites Schaltsignal
- S3: drittes Schaltsignal
- SD: Drucksignal
- TCV: Anhängersteuerventil

## Patentansprüche

1. Elektropneumatisches Feststellbremsmodul (1), mit
einem Vorratsanschluss (2) zum Anschließen eines Druckluftvorrats (3),
wenigstens einem Federspeicheranschluss (4) zum Anschließen wenigstens eines Federspeicherbremszylinders (6),
einer Einlass-Auslass-Ventileinheit (10), die wenigstens eine erste Schaltstellung und eine zweite Schaltstellung einnehmen kann, und
einer elektropneumatischen Vorsteuereinheit (12) zum Aussteuern wenigstens eines ersten Steuerdrucks (p1) an der Einlass-Auslass-Ventileinheit (10),
wobei in der ersten Schaltstellung der Einlass-Auslass-Ventileinheit (10) der Federspeicheranschluss (4) mit dem Vorratsanschluss (2) zum Aussteuern eines Federspeicherbremsdrucks (pF) verbunden ist, und in der zweiten Schaltstellung der Einlass-Auslass-Ventileinheit (10) der Federspeicheranschluss (4) mit einem Entlüftungsanschluss (14.3) der Einlass-Auslass-Ventileinheit (10) verbunden ist,
wobei die Einlass-Auslass-Ventileinheit (10) in der zweiten Schaltstellung ist, wenn der erste Steuerdruck (p1) unterhalb eines ersten Grenzwerts liegt, **dadurch gekennzeichnet, dass**
das elektropneumatische Feststellbremsmodul (1) einen Lösesteueranschluss (90) aufweist, an dem von einer externen Einheit ein Lösesteuerdruck (pL) aussteuerbar ist, der die Einlass-Auslass-Ventileinheit (10) dazu veranlasst, in die erste Schaltstellung zu schalten.

2. Elektropneumatisches Feststellbremsmodul (1) nach Anspruch 1, wobei Lösesteuerdruck (pL) wahlweise zur Ausübung einer Anti-Compound-Funktion und/oder Notlösefunktion aussteuerbar ist.

3. Elektropneumatisches Feststellbremsmodul (1) nach Anspruch 1 oder 2, wobei der Lösesteuerdruck (pL) ein Betriebsbremsdruck (pBHA) einer Hinterachse ist.

4. Elektropneumatisches Feststellbremsmodul (1) nach einem der vorstehenden Ansprüche, wobei die Vorsteuereinheit (12) einen Entlüftungsanschluss (21.3) zum Entlüften des ersten Steuerdrucks (p1) aufweist, der mit einer Lösesteuerleitung (92) verbunden ist, die zu dem Lösesteueranschluss (90) führt.

5. Elektropneumatisches Feststellbremsmodul (1) nach einem der vorstehenden Ansprüche 1 bis 3, aufweisend ein Wechselventil (94), welches zwischen die Vorsteuereinheit (12) und die Einlass-Auslass-Ventileinheit (10) geschaltet ist, wobei das Wechselventil (94) einen den ersten Steuerdruck (p1) von der Vorsteuereinheit (12) empfangenden ersten Wechselventilanschluss (94.1), einen mit dem Lösesteueranschluss (90) verbundenen zweiten Wechselventilanschluss (94.2), und einen mit der Einlass-Auslass-Ventileinheit (10) verbundenen und an diese wahlweise den ersten Steuerdruck (p1) oder den Lösesteuerdruck (pL) weitergebenden dritten Wechselventilanschluss (94.3) aufweist.

6. Elektropneumatisches Feststellbremsmodul (1) nach einem der vorstehenden Ansprüche, wobei die Einlass-Auslass-Ventileinheit (10) wenigstens ein erstes pneumatisch gesteuertes 3/2-Wegeventil (14) mit genau zwei Schaltstellungen aufweist.

7. Elektropneumatisches Feststellbremsmodul (1) nach einem der vorstehenden Ansprüche, wobei in der ersten Schaltstellung der Einlass-Auslass-Ventileinheit (10) der Federspeicherbremsdruck (pF) direkt von dem Vorratsanschluss (2) an den Federspeicheranschluss (4) durchsteuerbar ist.

8. Elektropneumatisches Feststellbremsmodul (1) nach einem der vorstehenden Ansprüche, wobei die Einlass-Auslass-Ventileinheit (10) wenigstens ein 2/2-Wege-Sperrventil (16) aufweist.

9. Elektropneumatisches Feststellbremsmodul (1) nach Anspruch 6 und 8, wobei das erste 3/2-Wegeventil (14) als Einlass-Auslass-Ventil für den Federspeicheranschluss (4) zum Be- und Entlüften des Federspeicheranschlusses (4) dient und das 2/2-Wege-Sperrventil (16) zum Sperren einer Be- und Entlüften des Federspeicheranschlusses (4) dient.

10. Elektropneumatisches Feststellbremsmodul (1) nach einem der vorstehenden Ansprüche 6 oder 9, wobei das erste 3/2-Wegeventil (14) einen Einlassanschluss (14.1), einen Arbeitsanschluss (14.2) und einen Entlüftungsanschluss (14.3) aufweist, und das erste 3/2-Wegeventil (14) dazu ausgebildet ist, wechselseitig den Arbeitsanschluss (14.2) mit dem Einlassanschluss (14.1) und dem Entlüftungsanschluss (14.3) zu verbinden.

11. Elektropneumatisches Feststellbremsmodul (1) nach Anspruch 10, wobei das 2/2-Wege-Sperrventil (16) einen ersten Sperrventilanschluss (16.1) und einen zweiten Sperrventilanschluss (16.2) aufweist, wobei der erste Sperrventilanschluss (16.1) mit dem Arbeitsanschluss (14.2), und der zweite Sperrventilanschluss (16.2) mit dem Federspeicheranschluss (4) verbunden ist.

12. Elektropneumatisches Feststellbremsmodul (1) nach einem der vorstehenden Ansprüche, wobei die elektropneumatische Vorsteuereinheit (12) wenigstens ein zweites 3/2-Wege-Ventil (20) aufweist, wobei das zweite 3/2-Wege-Ventil (20) zum Aussteuern des ersten Steuerdrucks (p1) vorgesehen ist.

13. Elektropneumatisches Feststellbremsmodul (1) nach Anspruch 12, wobei das zweite 3/2-Wege-Ventil (20) als Bistabilventil (21) ausgebildet ist.

14. Elektropneumatisches Feststellbremsmodul (1) nach Anspruch 13, wobei das Bistabilventil (21) einen ersten Bistabilventilanschluss (21.1), einen zweiten Bistabilventilanschluss (21.2) und einen dritten Bistabilventilanschluss (21.3) aufweist, wobei der erste Bistabilventilanschluss (21.1) mit dem Vorratsanschluss (2) verbunden ist, der zweite Bistabilventilanschluss (21.2) den ersten Steuerdruck (p1) aussteuert und über den dritten Bistabilventilanschluss (21.3) der erste Steuerdruck (p1) entlüftbar ist.

15. Elektropneumatisches Feststellbremsmodul (1) nach Anspruch 6 und 14, wobei der zweite Bistabilventilanschluss (21.2) mit einem ersten Steuereingang (14.4) des ersten 3/2-Wege-Ventils (14) mittels einer ersten pneumatischen Steuerleitung (56) verbunden oder verbindbar ist.

16. Elektropneumatisches Feststellbremsmodul (1) nach Anspruch 15, wobei der Lösesteuerdruck (pL) direkt in die erste pneumatische Steuerleitung (56) aussteuerbar ist.

17. Elektropneumatisches Feststellbremsmodul (1) nach Anspruch 5 und 14 oder 15, wobei das Wechselventil (94) zwischen das Bistabilventil (21) und das erste 3/2-Wege-Ventil (14) geschaltet ist, und wobei vorzugsweise der erste Wechselventilanschluss (94.1) mit dem zweiten Bistabilventilanschluss (21.2) und der dritte Wechselventilanschluss (94.3) mit dem ersten Steuereingang (14.4) verbunden ist.

18. Elektropneumatisches Feststellbremsmodul (1) nach einem der vorstehenden Ansprüche 1 bis 11, wobei die elektropneumatische Vorsteuereinheit (12) eine monostabile Einlass-Auslass-Ventilkombination (65) mit einem Einlassventil (70) und einem Auslassventil (72) zum Aussteuern des ersten Steuerdrucks (p1) aufweist.

19. Elektropneumatisches Feststellbremsmodul (1) nach Anspruch 18, aufweisend eine Rückführleitung (67), die den von dem ersten 3/2-Wegeventil (14) ausgesteuerten Druck (pVS) als ersten Steuerdruck (p1) an der Einlass-Auslass-Ventileinheit (10) bereitstellt.

20. Elektropneumatisches Feststellbremsmodul (1) nach Anspruch 19, wobei der von dem ersten 3/2-Wegeventil (14) ausgesteuerte Druck (pVS) gedrosselt als erster Steuerdruck (p1) über die Rückführleitung (67) an der Einlass-Auslass-Ventileinheit (10) bereitgestellt wird.

21. Elektropneumatisches Feststellbremsmodul (1) nach einem der Ansprüche 18 bis 20, wobei das Einlassventil (70) einen mit dem Vorratsanschluss (2) verbundenen ersten Einlassventilanschluss (70.1) und einen mit der Einlass-Auslass-Ventileinheit (10) verbundenen zweiten Einlassventilanschluss (70.2) aufweist, wobei durch Schalten des Einlassventils (70) der erster Steuerdruck (p1) an dem zweiten Einlassventilanschluss (70.2) aussteuerbar ist.

22. Elektropneumatisches Feststellbremsmodul (1) nach einem der Ansprüche 18 bis 21, wobei das Auslassventil (72) einen mit der Einlass-Auslass-Ventileinheit (10) verbundenen ersten Auslassventilanschluss (72.1) und einen mit einer Entlüftung (5) verbundenen zweiten Auslassventilanschluss (72.2) zum Entlüften des ersten Steuerdrucks (p1) aufweist.

23. Elektropneumatisches Feststellbremsmodul (1) nach Anspruch 19 oder 20, wobei die Rückführleitung (67) direkt mit der Einlass-Auslass-Ventileinheit (10) verbunden ist.

24. Elektropneumatisches Feststellbremsmodul (1) nach Anspruch 19 und 21, wobei das Einlassventil (70) einen mit der Rückführleitung (67) verbundenen dritten Einlassventilanschluss (70.3) aufweist, wobei in einer ersten Schaltstellung des Einlassventils (70) der zweite Einlassventilanschluss (70.2) mit dem ersten Einlassventilanschluss (70.1) verbunden ist, und in einer zweiten Schaltstellung des Einlassventils (70) der zweite Einlassventilanschluss (70.2) mit dem dritten Einlassventilanschluss (70.3) verbunden ist.

25. Elektropneumatisches Feststellbremsmodul (1) nach Anspruch 5 und 24, wobei das Wechselventil (94) zwischen das Einlassventil (70) und das erste ersten 3/2-Wege-Ventil (14) geschaltet ist, und wobei vorzugsweise der erste Wechselventilanschluss (94.1) mit dem zweiten Einlassventilanschluss (70.2) und der dritte Wechselventilanschluss (94.3) mit dem ersten Steuereingang (14.4) verbunden ist.

26. Elektropneumatisches Feststellbremsmodul (1) nach einem der vorstehenden Ansprüche, wobei die elektropneumatische Vorsteuereinheit (12) wenigstens ein drittes 3/2-Wege-Ventil (22) aufweist, zum Aussteuern eines zweiten Steuerdrucks (p2).

27. Elektropneumatisches Feststellbremsmodul (1) nach Anspruch 26, wobei das dritte 3/2-Wege-Ventil (22) einen Einlassanschluss (22.1), einen Arbeitsanschluss (22.2) und einen Entlüftungsanschluss (22.3) aufweist, und das dritte 3/2-WegeVentil (22) dazu ausgebildet ist, wechselseitig den Arbeitsanschluss (22.2) mit dem Einlassanschluss (22.1) und dem Entlüftungsanschluss (22.3) zu verbinden.

28. Elektropneumatisches Feststellbremsmodul (1) nach Anspruch 11, wobei der Einlassanschluss (22.1) mit dem Vorratsanschluss (2), der Arbeitsanschluss (22.2) mit einem zweiten Steuereingang (16.3) des 2/2-Wege-Sperrventils (16) und der Entlüftungsanschluss (22.3) mit einer Entlüftung (5) verbunden ist.

29. Elektropneumatisches Feststellbremsmodul (1) nach einem der vorstehenden Ansprüche, aufweisend einen Anhängersteuerventilanschluss (30) zum Bereitstellen eines Anhängersteuerdrucks (pA).

30. Elektropneumatisches Feststellbremsmodul (1) nach Anspruch 29, wobei der Anhängersteuerventilanschluss (30) mit einem Anhängerventil (32) verbunden ist, das dazu vorgesehen ist, in einer ersten Schaltstellung wenigstens den Federspeicherbremsdruck (pF) als Anhängersteuerdrucks (pA) an dem Anhängersteuerventilanschluss (30) auszusteuern.

31. Elektropneumatisches Feststellbremsmodul (1) nach Anspruch 30, wobei das Anhängerventil (32) eine zweite Schaltstellung zum Ausführen einer Anhängerkontrollstellungsfunktion aufweist.

32. Elektropneumatisches Feststellbremsmodul (1) nach Anspruch 31, wobei das Anhängerventil (32) als viertes 3/2-Wegeventil (34) ausgebildet ist und einen ersten Anhängerventilanschluss (34.1), einen zweiten Anhängerventilanschluss (34.2) und einen dritten Anhängerventilanschluss (34.3) aufweist, wobei der erste Anhängerventilanschluss (34.1) mit dem Vorratsanschluss (2), der zweite Anhängerventilanschluss (34.2) mit dem Anhängersteuerventilanschluss (30) und der dritte Anhängerventilanschluss (34.3) mit einer Abzweigleitung (36) verbunden ist, die von einer mit dem Federspeicheranschluss (4) verbundenen Federspeicherbremsdruckleitung (38) abzweigt.

33. Elektropneumatisches Feststellbremsmodul (1) nach einem der vorstehenden Ansprüche, aufweisend eine elektrische Steuereinheit (ECU) mit einem elektrischen Anschluss (40) zum Empfangen von Feststellbremssignalen (HCU) und zum Bereitstellen entsprechender Schaltsignale (S1, S2, S3) wenigstens an die Vorsteuereinheit (12).

34. Elektropneumatisches Feststellbremsmodul (1) nach einem der vorstehenden Ansprüche, aufweisend einen Drucksensor (42), der dazu vorgesehen ist, den Federspeicherbremsdruck (pF) zu erfassen und ein entsprechendes Drucksignal (SD) bereitzustellen.

## Claims

1. Electropneumatic parking brake module (1), comprising
a supply connection (2) for connecting a compressed air supply (3),
at least one spring brake connection (4) for connecting at least one spring-loaded brake cylinder (6),
an inlet-outlet valve unit (10) which can assume at least a first switching position and a second switching position, and
an electropneumatic pilot control unit (12) for controlling at least a first control pressure (p1) at the inlet-outlet valve unit (10),
in the first switching position of the inlet-outlet valve unit (10) the spring brake connection (4) being connected to the supply connection (2) in order to control a spring-loaded brake pressure (pF), and in the second switching position of the inlet-outlet valve unit (10) the spring brake connection (4) being connected to a vent connection (14.3) of the inlet-outlet valve unit (10),
the inlet-outlet valve unit (10) being in the second switching position when the first control pressure (p1) is below a first limit value, **characterized in that**
the electropneumatic parking brake module (1) has a release control connection (90), at which a release control pressure (pL) can be controlled by an external unit, which pressure causes the inlet-outlet valve unit (10) to switch to the first switching position.

2. Electropneumatic parking brake module (1) according to claim 1, wherein the release control pressure (pL) can be selectively controlled for performing an anti-compounding function and/or emergency release function.

3. Electropneumatic parking brake module (1) according to either claim 1 or claim 2, wherein the release control pressure (pL) is a service brake pressure (pBHA) of a rear axle.

4. Electropneumatic parking brake module (1) according to any of the preceding claims, wherein the pilot control unit (12) has a vent connection (21.3) for venting the first control pressure (p1), which vent connection is connected to a release control line (92) leading to the release control connection (90).

5. Electropneumatic parking brake module (1) according to any of the preceding claims 1 to 3, comprising a shuttle valve (94) which is connected between the pilot control unit (12) and the inlet-outlet valve unit (10), wherein the shuttle valve (94) has a first shuttle valve connection (94.1) receiving the first control pressure (p1) from the pilot control unit (12), a second shuttle valve connection (94.2) connected to the release control connection (90), and a third shuttle valve connection (94.3) connected to the inlet-outlet valve unit (10) and selectively transferring the first control pressure (p1) or the release control pressure (pL) to said inlet-outlet valve unit.

6. Electropneumatic parking brake module (1) according to any of the preceding claims, wherein the inlet-outlet valve unit (10) has at least a first pneumatically controlled 3/2-way valve (14) having precisely two switching positions.

7. Electropneumatic parking brake module (1) according to any of the preceding claims, wherein, in the first switching position of the inlet-outlet valve unit (10), the spring-loaded brake pressure (pF) can be routed through directly from the supply connection (2) to the spring brake connection (4).

8. Electropneumatic parking brake module (1) according to any of the preceding claims, wherein the inlet-outlet valve unit (10) has at least one 2/2-way shut-off valve (16).

9. Electropneumatic parking brake module (1) according to claim 6 and claim 8, wherein the first 3/2-way valve (14) serves as an inlet-outlet valve for the spring brake connection (4) for ventilating and venting the spring brake connection (4), and the 2/2-way shut-off valve (16) serves to block ventilation and venting of the spring brake connection (4).

10. Electropneumatic parking brake module (1) according to either of the preceding claims 6 or 9, wherein the first 3/2-way valve (14) has an inlet connection (14.1), a working connection (14.2) and a vent connection (14.3), and the first 3/2-way valve (14) is designed to alternately connect the working connection (14.2) to the inlet connection (14.1) and the vent connection (14.3).

11. Electropneumatic parking brake module (1) according to claim 10, wherein the 2/2-way shut-off valve (16) has a first shut-off valve connection (16.1) and a second shut-off valve connection (16.2), wherein the first shut-off valve connection (16.1) is connected to the working connection (14.2), and the second shut-off valve connection (16.2) is connected to the spring brake connection (4).

12. Electropneumatic parking brake module (1) according to any of the preceding claims, wherein the electropneumatic pilot control unit (12) has at least a second 3/2-way valve (20), wherein the second 3/2-way valve (20) is provided for controlling the first control pressure (p1).

13. Electropneumatic parking brake module (1) according to claim 12, wherein the second 3/2-way valve (20) is designed as a bistable valve (21).

14. Electropneumatic parking brake module (1) according to claim 13, wherein the bistable valve (21) has a first bistable valve connection (21.1), a second bistable valve connection (21.2), and a third bistable valve connection (21.3), wherein the first bistable valve connection (21.1) is connected to the supply connection (2), the second bistable valve connection (21.2) controls the first control pressure (p1), and the first control pressure (p1) can be vented via the third bistable valve connection (21.3).

15. Electropneumatic parking brake module (1) according to claim 6 and claim 14, wherein the second bistable valve connection (21.2) is connected or can be connected to a first control input (14.4) of the first 3/2-way valve (14) by means of a first pneumatic control line (56).

16. Electropneumatic parking brake module (1) according to claim 15, wherein the release control pressure (pL) can be output directly into the first pneumatic control line (56).

17. Electropneumatic parking brake module (1) according to claim 5 and claim 14 or claim 15, wherein the shuttle valve (94) is connected between the bistable valve (21) and the first 3/2-way valve (14), and wherein, preferably, the first shuttle valve connection (94.1) is connected to the second bistable valve connection (21.2) and the third shuttle valve connection (94.3) is connected to the first control input (14.4).

18. Electropneumatic parking brake module (1) according to any of the preceding claims 1 to 11, wherein the electropneumatic pilot control unit (12) has a monostable inlet-outlet valve combination (65) having an inlet valve (70) and an outlet valve (72) for controlling the first control pressure (p1).

19. Electropneumatic parking brake module (1) according to claim 18, having a return line (67) which provides the pressure (pVS) controlled by the first 3/2-way valve (14) as the first control pressure (p1) at the inlet-outlet valve unit (10).

20. Electropneumatic parking brake module (1) according to claim 19, wherein the pressure (pVS) controlled by the first 3/2-way valve (14) is provided in a throttled manner as the first control pressure (p1) via the return line (67) at the inlet-outlet valve unit (10).

21. Electropneumatic parking brake module (1) according to any of claims 18 to 20, wherein the inlet valve (70) has a first inlet valve connection (70.1) connected to the supply connection (2) and a second inlet valve connection (70.2) connected to the inlet-outlet valve unit (10), wherein the first control pressure (p1) can be controlled at the second inlet valve connection (70.2) by switching the inlet valve (70).

22. Electropneumatic parking brake module (1) according to any of claims 18 to 21, wherein the outlet valve (72) has a first outlet valve connection (72.1) connected to the inlet-outlet valve unit (10) and a second outlet valve connection (72.2) which is connected to a vent (5) and is intended for venting the first control pressure (p1).

23. Electropneumatic parking brake module (1) according to either claim 19 or claim 20, wherein the return line (67) is directly connected to the inlet-outlet valve unit (10).

24. Electropneumatic parking brake module (1) according to claim 19 and claim 21, wherein the inlet valve (70) has a third inlet valve connection (70.3) connected to the return line (67), wherein the second inlet valve connection (70.2) is connected to the first inlet valve connection (70.1) in a first switching position of the inlet valve (70), and the second inlet valve connection (70.2) is connected to the third inlet valve connection (70.3) in a second switching position of the inlet valve (70).

25. Electropneumatic parking brake module (1) according to claim 5 and claim 24, wherein the shuttle valve (94) is connected between the inlet valve (70) and the first 3/2-way valve (14), and wherein, preferably, the first shuttle valve connection (94.1) is connected to the second inlet valve connection (70.2) and the third shuttle valve connection (94.3) is connected to the first control input (14.4).

26. Electropneumatic parking brake module (1) according to any of the preceding claims, wherein the electropneumatic pilot control unit (12) has at least a third 3/2-way valve (22) for controlling a second control pressure (p2).

27. Electropneumatic parking brake module (1) according to claim 26, wherein the third 3/2-way valve (22) has an inlet connection (22.1), a working connection (22.2) and a vent connection (22.3), and the third 3/2-way valve (22) is designed to alternately connect the working connection (22.2) to the inlet connection (22.1) and the vent connection (22.3).

28. Electropneumatic parking brake module (1) according to claim 11, wherein the inlet connection (22.1) is connected to the supply connection (2), the working connection (22.2) is connected to a second control input (16.3) of the 2/2-way shut-off valve (16), and the vent connection (22.3) is connected to a vent (5).

29. Electropneumatic parking brake module (1) according to any of the preceding claims, having a trailer control valve connection (30) for providing a trailer control pressure (pA).

30. Electropneumatic parking brake module (1) according to claim 29, wherein the trailer control valve connection (30) is connected to a trailer valve (32) which is provided to control, in a first switching position, at least the spring-loaded brake pressure (pF) as the trailer control pressure (pA) at the trailer control valve connection (30).

31. Electropneumatic parking brake module (1) according to claim 30, wherein the trailer valve (32) has a second switching position for performing a trailer control position function.

32. Electropneumatic parking brake module (1) according to claim 31, wherein the trailer valve (32) is designed as a fourth 3/2-way valve (34) and has a first trailer valve connection (34. 1), a second trailer valve connection (34.2), and a third trailer valve connection (34.3), wherein the first trailer valve connection (34.1) is connected to the supply connection (2), the second trailer valve connection (34.2) is connected to the trailer control valve connection (30), and the third trailer valve connection (34.3) is connected to a branch line (36) which branches off from a spring-loaded brake pressure line (38) connected to the spring brake connection (4).

33. Electropneumatic parking brake module (1) according to any of the preceding claims, having an electrical control unit (ECU) which comprises an electrical connection (40) for receiving parking brake signals (HCU) and for providing corresponding switching signals (S1, S2, S3) at least to the pilot control unit (12).

34. Electropneumatic parking brake module (1) according to any of the preceding claims, having a pressure sensor (42) provided to detect the spring-loaded brake pressure (pF) and to provide a corresponding pressure signal (SD).

## Revendications

1. Module de frein de stationnement électropneumatique (1), comportant
un raccord de réserve (2) pour le raccordement d'une réserve d'air comprimé (3),
au moins un raccord d'accumulateur à ressort (4) pour le raccordement d'au moins un cylindre de frein à accumulateur à ressort (6),
une unité de soupape d'admission et d'échappement (10) pouvant occuper au moins une première position de commutation et une seconde position de commutation, et
une unité pilote (12) électropneumatique pour la régulation d'au moins une première pression de commande (p1) au niveau de l'unité de soupape d'admission et d'échappement (10),
dans lequel, dans la première position de commutation de l'unité de soupape d'admission et d'échappement (10), le raccord d'accumulateur à ressort (4) est relié au raccord de réserve (2) pour la régulation d'une pression de frein à accumulateur à ressort (pF) et, dans la seconde position de commutation de l'unité de soupape d'admission et d'échappement (10), le raccord d'accumulateur à ressort (4) est relié à un raccord de purge (14.3) de l'unité de soupape d'admission et d'échappement (10),
dans lequel l'unité de soupape d'admission et d'échappement (10) est dans la seconde position de commutation lorsque la première pression de commande (p1) est inférieure à une première valeur limite, **caractérisé en ce que**
le module de frein de stationnement électropneumatique (1) présente un raccord de commande de desserrage (90) au niveau duquel une pression de commande de desserrage (pL) peut être régulée par une unité externe, laquelle pression amène l'unité de soupape d'admission et d'échappement (10) à commuter vers la première position de commutation.

2. Module de frein de stationnement électropneumatique (1) selon la revendication 1, dans lequel la pression de commande de desserrage (pL) peut être régulée de manière sélective pour l'application d'une fonction de non-addition des efforts de freinage et/ou une fonction de desserrage d'urgence.

3. Module de frein de stationnement électropneumatique (1) selon la revendication 1 ou 2, dans lequel la pression de commande de desserrage (pL) est une pression de frein de service (pBHA) d'un essieu arrière.

4. Module de frein de stationnement électropneumatique (1) selon l'une des revendications précédentes, dans lequel l'unité pilote (12) présente un raccord de purge (21.3) pour la purge de la première pression de commande (p1), lequel raccord est relié à une conduite de commande de desserrage (92) menant au raccord de commande de desserrage (90).

5. Module de frein de stationnement électropneumatique (1) selon l'une des revendications précédentes 1 à 3, présentant une soupape à deux voies (94) montée entre l'unité pilote (12) et l'unité de soupape d'admission et d'échappement (10), dans lequel la soupape à deux voies (94) présente un premier raccord de soupape à deux voies (94.1) recevant la première pression de commande (p1) en provenance de l'unité pilote (12), un deuxième raccord de soupape à deux voies (94.2) relié au raccord de commande de desserrage (90) et un troisième raccord de soupape à deux voies (94.3) relié à l'unité de soupape d'admission et d'échappement (10) et transmettant à celle-ci de manière sélective la première pression de commande (p1) ou la pression de commande de desserrage (pL).

6. Module de frein de stationnement électropneumatique (1) selon l'une des revendications précédentes, dans lequel l'unité de soupape d'admission et d'échappement (10) présente au moins une première soupape de distribution 3/2 voies (14) à commande pneumatique comportant exactement deux positions de commutation.

7. Module de frein de stationnement électropneumatique (1) selon l'une des revendications précédentes, dans lequel, dans la première position de commutation de l'unité de soupape d'admission et d'échappement (10), la pression de frein à accumulateur à ressort (pF) peut être dirigée directement depuis le raccord de réserve (2) vers le raccord d'accumulateur à ressort (4).

8. Module de frein de stationnement électropneumatique (1) selon l'une des revendications précédentes, dans lequel l'unité de soupape d'admission et d'échappement (10) présente au moins une soupape d'arrêt de distribution 2/2 voies (16).

9. Module de frein de stationnement électropneumatique (1) selon les revendications 6 et 8, dans lequel la première soupape de distribution 3/2 voies (14) sert de soupape d'admission et d'échappement pour le raccord d'accumulateur à ressort (4) pour l'aération et la purge du raccord d'accumulateur à ressort (4) et la soupape d'arrêt de distribution 2/2 voies (16) sert à l'arrêt d'une aération et d'une purge du raccord d'accumulateur à ressort (4).

10. Module de frein de stationnement électropneumatique (1) selon l'une des revendications précédentes 6 ou 9, dans lequel la première soupape de distribution 3/2 voies (14) présente un raccord d'admission (14.1), un raccord de travail (14.2) et un raccord de purge (14.3), et la première soupape de distribution 3/2 voies (14) est conçue pour relier de manière alternative le raccord de travail (14.2) au raccord d'admission (14.1) et au raccord de purge (14.3).

11. Module de frein de stationnement électropneumatique (1) selon la revendication 10, dans lequel la soupape d'arrêt de distribution 2/2 voies (16) présente un premier raccord de soupape d'arrêt (16.1) et un second raccord de soupape d'arrêt (16.2), le premier raccord de soupape d'arrêt (16.1) étant relié au raccord de travail (14.2) et le second raccord de soupape d'arrêt (16.2) étant relié au raccord d'accumulateur à ressort (4).

12. Module de frein de stationnement électropneumatique (1) selon l'une des revendications précédentes, dans lequel l'unité pilote (12) électropneumatique présente au moins une deuxième soupape de distribution 3/2 voies (20), la deuxième soupape de distribution 3/2 voies (20) étant prévue pour la régulation de la première pression de commande (p1).

13. Module de frein de stationnement électropneumatique (1) selon la revendication 12, dans lequel la deuxième soupape de distribution 3/2 voies (20) est conçue comme une soupape bistable (21).

14. Module de frein de stationnement électropneumatique (1) selon la revendication 13, dans lequel la soupape bistable (21) présente un premier raccord de soupape bistable (21.1), un deuxième raccord de soupape bistable (21.2) et un troisième raccord de soupape bistable (21.3), le premier raccord de soupape bistable (21.1) étant relié au raccord de réserve (2), le deuxième raccord de soupape bistable (21.2) régulant la première pression de commande (p1) et la première pression de commande (p1) pouvant être purgée par l'intermédiaire du troisième raccord de soupape bistable (21.3).

15. Module de frein de stationnement électropneumatique (1) selon les revendications 6 et 14, dans lequel le deuxième raccord de soupape bistable (21.2) est relié ou peut être relié à une première entrée de commande (14.4) de la première soupape de distribution 3/2 voies (14) au moyen d'une première ligne de commande pneumatique (56).

16. Module de frein de stationnement électropneumatique (1) selon la revendication 15, dans lequel la pression de commande de desserrage (pL) peut être régulée directement dans la première ligne de commande pneumatique (56).

17. Module de frein de stationnement électropneumatique (1) selon les revendications 5 et 14 ou 15, dans lequel la soupape à deux voies (94) est montée entre la soupape bistable (21) et la première soupape de distribution 3/2 voies (14), et de préférence le premier raccord de soupape à deux voies (94.1) étant relié au deuxième raccord de soupape bistable (21.2) et le troisième raccord de soupape à deux voies (94.3) étant relié à la première entrée de commande (14.4).

18. Module de frein de stationnement électropneumatique (1) selon l'une des revendications précédentes 1 à 11, dans lequel l'unité pilote (12) électropneumatique présente une combinaison de soupapes d'admission et d'échappement monostable (65) comportant une soupape d'admission (70) et une soupape d'échappement (72) pour la régulation de la première pression de commande (p1).

19. Module de frein de stationnement électropneumatique (1) selon la revendication 18, présentant une conduite de retour (67) qui fournit la pression (pVS) régulée par la première soupape de distribution 3/2 voies (14) comme première pression de commande (p1) à l'unité de soupape d'admission et d'échappement (10).

20. Module de frein de stationnement électropneumatique (1) selon la revendication 19, dans lequel la pression (pVS) régulée par la première soupape de distribution 3/2 voies (14) est fournie de manière réduite comme première pression de commande (p1) à l'unité de soupape d'admission et d'échappement (10) par l'intermédiaire de la conduite de retour (67).

21. Module de frein de stationnement électropneumatique (1) selon l'une des revendications 18 à 20, dans lequel la soupape d'admission (70) présente un premier raccord de soupape d'admission (70.1) relié au raccord de réserve (2) et un deuxième raccord de soupape d'admission (70.2) relié à l'unité de soupape d'admission et d'échappement (10), la première pression de commande (p1) pouvant être régulée au niveau du deuxième raccord de soupape d'admission (70.2) par la commutation de la soupape d'admission (70).

22. Module de frein de stationnement électropneumatique (1) selon l'une des revendications 18 à 21, dans lequel la soupape d'échappement (72) présente un premier raccord de soupape d'échappement (72.1) relié à l'unité de soupape d'admission et d'échappement (10) et un second raccord de soupape d'échappement (72.2) relié à un évent (5) pour la purge de la première pression de commande (p1).

23. Module de frein de stationnement électropneumatique (1) selon la revendication 19 ou 20, dans lequel la conduite de retour (67) est directement reliée à l'unité de soupape d'admission et d'échappement (10).

24. Module de frein de stationnement électropneumatique (1) selon les revendications 19 et 21, dans lequel la soupape d'admission (70) présente un troisième raccord de soupape d'admission (70.3) relié à la conduite de retour (67), dans une première position de commutation de la soupape d'admission (70), le deuxième raccord de soupape d'admission (70.2) étant relié au premier raccord de soupape d'admission (70.1) et, dans une seconde position de commutation de la soupape d'admission (70), le deuxième raccord de soupape d'admission (70.2) étant relié au troisième raccord de soupape d'admission (70.3).

25. Module de frein de stationnement électropneumatique (1) selon les revendications 5 et 24, dans lequel la soupape à deux voies (94) est montée entre la soupape d'admission (70) et la première soupape de distribution 3/2 voies (14), et de préférence le premier raccord de soupape à deux voies (94.1) étant relié au deuxième raccord de soupape d'admission (70.2) et le troisième raccord de soupape à deux voies (94.3) étant relié à la première entrée de commande (14.4).

26. Module de frein de stationnement électropneumatique (1) selon l'une des revendications précédentes, dans lequel l'unité pilote (12) électropneumatique présente au moins une troisième soupape de distribution 3/2 voies (22) pour la régulation d'une seconde pression de commande (p2).

27. Module de frein de stationnement électropneumatique (1) selon la revendication 26, dans lequel la troisième soupape de distribution 3/2 voies (22) présente un raccord d'admission (22.1), un raccord de travail (22.2) et un raccord de purge (22.3), et la troisième soupape de distribution 3/2 voies (22) est conçue pour relier de manière alternative le raccord de travail (22.2) au raccord d'admission (22.1) et au raccord de purge (22.3).

28. Module de frein de stationnement électropneumatique (1) selon la revendication 11, dans lequel le raccord d'admission (22.1) est relié au raccord de réserve (2), le raccord de travail (22.2) est relié à une seconde entrée de commande (16.3) de la soupape d'arrêt de distribution 2/2 voies (16) et le raccord de purge (22.3) est relié à un évent (5).

29. Module de frein de stationnement électropneumatique (1) selon l'une des revendications précédentes, présentant un raccord de soupape de commande de remorque (30) pour la fourniture d'une pression de commande de remorque (pA).

30. Module de frein de stationnement électropneumatique (1) selon la revendication 29, dans lequel le raccord de soupape de commande de remorque (30) est relié à une soupape de remorque (32) prévue pour réguler, dans une première position de commutation, au moins la pression de frein à accumulateur à ressort (pF) comme pression de commande de remorque (pA) au niveau du raccord de soupape de commande de remorque (30).

31. Module de frein de stationnement électropneumatique (1) selon la revendication 30, dans lequel la soupape de remorque (32) présente une seconde position de commutation pour l'exécution d'une fonction de position de contrôle de remorque.

32. Module de frein de stationnement électropneumatique (1) selon la revendication 31, dans lequel la soupape de remorque (32) est réalisée comme une quatrième soupape de distribution 3/2 voies (34) et présente un premier raccord de soupape de remorque (34.1), un deuxième raccord de soupape de remorque (34.2) et un troisième raccord de soupape de remorque (34.3), le premier raccord de soupape de remorque (34.1) étant relié au raccord de réserve (2), le deuxième raccord de soupape de remorque (34.2) étant relié au raccord de soupape de commande de remorque (30) et le troisième raccord de soupape de remorque (34.3) étant relié à une conduite de dérivation (36) qui dérive depuis une conduite de pression de frein à accumulateur à ressort (38) reliée au raccord d'accumulateur à ressort (4).

33. Module de frein de stationnement électropneumatique (1) selon l'une des revendications précédentes, présentant une unité de commande électrique (ECU) comportant une borne électrique (40) pour la réception de signaux de frein de stationnement (HCU) et pour la fourniture de signaux de commutation correspondants (S1, S2, S3) au moins à l'unité pilote (12).

34. Module de frein de stationnement électropneumatique (1) selon l'une des revendications précédentes, présentant un capteur de pression (42) prévu pour détecter la pression de frein à accumulateur à ressort (pF) et pour fournir un signal de pression correspondant (SD).
